(19) Europäisches Patentamt
European Patent Office
Office européen des brevets

(11) EP 4 016 408 B1

(12) **EUROPEAN PATENT SPECIFICATION**

(45) Date of publication and mention of the grant of the patent:
**22.07.2026 Bulletin 2026/30**

(21) Application number: **20925308.7**

(22) Date of filing: **21.08.2020**

(51) International Patent Classification (IPC):
***G06Q 10/00*** *(2026.01)* ***G06Q 50/10*** *(2012.01)*
***G06Q 10/20*** *(2023.01)*

(52) Cooperative Patent Classification (CPC):
**G06Q 10/20; G06Q 10/00; G06Q 50/10**

(86) International application number:
**PCT/JP2020/031618**

(87) International publication number:
**WO 2021/186762 (23.09.2021 Gazette 2021/38)**

(54) **MAINTENANCE ASSISTANCE SYSTEM AND MAINTENANCE ASSISTANCE METHOD**
WARTUNGSUNTERSTÜTZUNGSSYSTEM UND WARTUNGSUNTERSTÜTZUNGSVERFAHREN
DISPOSITIF D'AIDE À LA MAINTENANCE ET PROCÉDÉ D'AIDE À LA MAINTENANCE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.03.2020 JP 2020045294**

(43) Date of publication of application:
**22.06.2022 Bulletin 2022/25**

(73) Proprietor: **Hitachi, Ltd.**
**Tokyo 100-8280 (JP)**

(72) Inventors:
- **WANG, Wei**
**Tokyo 100-8280 (JP)**
- **YANO, Kojin**
**Tokyo 100-8280 (JP)**
- **WAKAMIYA, Takashi**
**Tokyo 100-8280 (JP)**

(74) Representative: **Manitz Finsterwald**
**Patent- und Rechtsanwaltspartnerschaft mbB**
**Martin-Greif-Straße 1**
**80336 München (DE)**

(56) References cited:
**EP-A2- 1 724 717**
**WO-A1-2018/101050**
**WO-A1-2018/177951**
**JP-A- 2010 533 903**
**JP-A- 2016 146 020**
**JP-A- 2018 120 487**
**JP-A- 2019 139 375**
**US-A1- 2008 219 544**
**US-A1- 2012 209 798**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

The present invention relates to a maintenance assistance system and a maintenance assistance method.

In recent years, in social infrastructure such as electric power, railways, water and sewage, urban transportation, and the like, equipment maintenance systems are known in which sensors are attached to on-site equipment, and the values acquired by these sensors are compared with parameters such as predetermined threshold values in order to determine if the monitoring target equipment is operating normally or if an abnormality has occurred.

As the equipment used in such equipment maintenance systems has diversified, the types, numbers, and functions of the sensors required to accurately ascertain the state of the equipment have also diversified. However, as the types, numbers, and functions of the sensors diversify, it becomes difficult to set the abnormality determination parameters used to determine whether or not an abnormality has occurred with respect to the monitoring target equipment to appropriate values.

Accordingly, there is demand for a technique for efficiently ascertaining abnormality determination parameters for determining whether or not an abnormality has occurred with respect to particular equipment, and some proposals have been made.

For example, WO 2016/116961 describes a technique in which "this information processing device (101) is provided with: a setting unit (105) for setting a normal region that indicates ranges of normal values for monitored data comprising time-series signals, on the basis of an upper limit and a lower limit; a determination unit (107) for determining whether the monitored data has deviated from the normal region, and, if it is determined that the monitored data has deviated from the normal region, outputting a determined time, which is the time at which the monitored data is determined to have deviated from the normal region; and a detection unit

(108) for receiving the determined time from the determination unit (107) and detecting the start time at which the monitored data began to exhibit abnormality before the determined time, on the basis of a degree of deviation indicating the difference between the monitored data and an average of a plurality of pieces of learning data comprising signals that are included in known monitored data and that have normal values."

In addition, in recent years, techniques for detecting causal relationships between operational data acquired from equipment such as sensors, algorithms for learning detected causal relationships, and the like have been proposed.

For example, Japanese Unexamined Patent Application Publication No. 2018-156346 (herein referred to as JP No. 2018-156346) describes a technique in which "A business improvement assistance device 100 includes a non-linear term addition unit 111 for calculating a non-linear value as pertains to respective items of business data 4 in a business data aggregate 5 and adding the non-linear value to the business data aggregate 5; a multiple regression analysis unit 112 for calculating, by linear multiple regression, a regression formula pertaining to each of the items of business data 4; a data group setting unit 113 for determining whether there is a linear item in the regression formula calculated herein, and setting predetermined data constituting the linear item and an objective variable of the regression formula to the same group; and a candidate explanatory variable screening unit 114 for screening the business data 4, excluding the predetermined data, as a candidate explanatory variable for linear multiple regression analysis."

WO 2016/116961 describes that a threshold value for determining whether or not an abnormality has occurred with respect to equipment is calculated by a calculation based on the standard deviations of signals from a plurality of sensors. This makes it possible to more accurately determine the time when a signal begins to exhibit abnormality.

However, in the technique described in WO 2016/116961, since there are parameters that take time to determine the optimum setting value, it would be difficult to apply the method of WO 2016/116961 to real-time monitoring in which swift parameter determination is required.

In addition, the above-mentioned JP No. 2018-156346 describes that causal relationships between predetermined data are estimated by using a causal structure model (hereinafter referred to as a Causal Loop Diagram Formula, or "CLD formula") that indicates causal relationships in operational data, and considers the non-linearity between the data.

However, in the technique described in JP No. 2018-156346, determining a threshold value for determining whether or not an abnormality has occurred with respect to equipment is not anticipated.

EP 1 724 717 A2 discloses at a method and apparatus for diagnosis and prognosis of faults based on sensor data and discrete data wherein a first anomaly detector is operable to identify unmodelled events based on one or more coherence statistic and a second anomality detector is operable to detect discrepancies in the sensor data based on a statistical model. US 2012/209798 A1 teaches a method for learning an autonomous biologically based learning tool system, wherein the learning tool system includes one or more tool systems which perform a specific task and generates data that reflects the process and a tool performance. US 2008/219544 A1 describes a factor estimating support device for supporting estimation of factor from a result generated in a system to be diagnosed wherein a result abnormality determining part determines whether a variable corresponding to the result is abnormal and a variable abnormal determining part determines whether each variable other than the variable corresponding to the result is abnormal when the result abnormality determining part determines as abnormal.

Accordingly, it is an object of the present invention to provide a maintenance assistance system and method for optimizing an abnormality determination and in particular for efficiently determining an abnormality determination parameter for determining whether or not an abnormality has occurred.
This object is satisfied by the subject-matters of claims 1 and 7.

One representative aspect of the present invention relates to a maintenance assistance system comprising: a set of sensors for obtaining state data that relates to a state of monitoring target equipment; a maintenance assistance device for determining whether or not an abnormality has occurred with respect to the monitoring target equipment; and a storage device for storing at least the state data, wherein: the maintenance assistance device includes: a parameter generation unit for generating an abnormality determination parameter to be used for abnormality determination of the monitoring target equipment, and the parameter generation unit includes: a first accuracy estimation unit for estimating, using a first set of state data that is obtained from the set of sensors and that relates to a state of the monitoring target equipment and a causal structure model corresponding to the set of sensors, a set of accuracy values that indicate an accuracy of each sensor included in the set of sensors, and a parameter identification unit for identifying, by analyzing the first set of state data using abnormality determination parameter candidates that include values extracted from the set of accuracy values, an abnormality determination parameter from the abnormality determination parameter candidates that satisfies a predetermined abnormality detection rate criterion and a predetermined false alarm rate criterion, and storing the abnormality determination parameter in the storage device.

According to the present invention, it is possible to provide a maintenance assistance technique for classifying data into categories such as normal, noise, and abnormal by efficiently determining an abnormality determination parameter for determining whether or not an abnormality has occurred with respect to monitoring target equipment using a CLD model that indicates causal relationships between sensors, and analyzing the data acquired from the sensors in real time using the determined abnormality determination parameter.

[Brief Description of Drawings]

[Figure 1] FIG. 1 is a diagram illustrating a computer system for implementing the embodiments of the present invention.
[Figure 2] FIG. 2 is a diagram illustrating an example of a hardware configuration of a maintenance assistance system according to the embodiments of the present invention.
[Figure 3] FIG. 3 is a diagram illustrating an example of the logical configuration of the maintenance assistance system according to the embodiments of the present invention.
[Figure 4] FIG. 4 is a diagram illustrating an example of the monitoring data acquired by the sensors according to the embodiments of the present invention.
[Figure 5] FIG. 5 is a diagram illustrating an example of historical abnormality data according to the embodiments of the present invention.
[Figure 6] FIG. 6 is a diagram illustrating an example of the configuration of the CLD formula and abnormality determination parameter database according to the embodiments of the present invention.
[Figure 7] FIG. 7 is a diagram illustrating an example of the configuration of the real-time monitoring data database according to the embodiments of the present invention.
[Figure 8] FIG. 8 is a diagram illustrating an example of an equipment state screen according to the embodiments of the present invention.
[Figure 9] FIG. 9 is a diagram illustrating an example of an abnormality confirmation screen according to the embodiments of the present invention;
[Figure 10] FIG. 10 is a diagram illustrating an example of a data analysis screen according to the embodiments of the present invention.
[Figure 11] FIG. 11 is a diagram for explaining an example of abnormality detection performance indices according to the embodiments of the present invention.
[Figure 12] FIG. 12 is a diagram for explaining an abnormality determination parameter according to the embodiments of the present invention.
[Figure 13] FIG. 13 is a diagram illustrating an example of a noise determination method according to the embodiments of the present invention.
[Figure 14] FIG. 14 is a diagram illustrating the flow of an abnormality determination parameter determination process according to the embodiments of the present invention.
[Figure 15] FIG. 15 is a diagram illustrating an example of an accuracy list according to the embodiments of the present invention.
[Figure 16] FIG. 16 is a diagram illustrating an example of the flow of the abnormality verification process according to the embodiments of the present invention.

[Figure 17] FIG. 17 is a diagram illustrating an example of a flow of a real-time abnormality determination process according to the embodiments of the present invention.

[Figure 18] FIG. 18 is a diagram illustrating an example of an abnormality determination according to the embodiments of the present invention.

[Figure 19] FIG. 19 is a diagram illustrating an example of a flow of a maintenance operation according to the embodiments of the present invention.

[Description of Embodiment(s)]

Hereinafter, embodiments of the present disclosure will be described with reference to the drawings.

Further, in the description of the drawings, the same parts are indicated by the same reference numerals.

(Hardware Configuration)

Referring first to FIG. 1, a computer system 300 for implementing the embodiments of the present disclosure will be described. The mechanisms and devices of the various embodiments disclosed herein may be applied to any suitable computing system. The main components of the computer system 300 include one or more processors 302, a memory 304, a terminal interface 312, a storage interface 314, an I/O (Input/Output) device interface 316, and a network interface 318. These components may be interconnected via a memory bus 306, an I/O bus 308, a bus interface unit 309, and an I/O bus interface unit 310.

The computer system 300 may include one or more general purpose programmable central processing units (CPUs), 302A and 302B, herein collectively referred to as the processor 302. In some embodiments, the computer system 300 may contain multiple processors, and in other embodiments, the computer system 300 may be a single CPU system. Each processor 302 executes instructions stored in the memory 304 and may include an on-board cache.

In some embodiments, the memory 304 may include a random access semiconductor memory, storage device, or storage medium (either volatile or non-volatile) for storing data and programs. The memory 304 may store all or a part of the programs, modules, and data structures that perform the functions described herein. For example, the memory 304 may store a maintenance assistance application 350. In some embodiments, the maintenance assistance application 350 may include instructions or statements that execute the functions described below on the processor 302.

In some embodiments, the maintenance assistance application 350 may be implemented in hardware via semiconductor devices, chips, logic gates, circuits, circuit cards, and/or other physical hardware devices in lieu of, or in addition to processor-based systems. In some embodiments, the maintenance assistance application 350 may include data other than instructions or statements. In some embodiments, a camera, sensor, or other data input device (not shown) may be provided to communicate directly with the bus interface unit 309, the processor 302, or other hardware of the computer system 300.

The computer system 300 may include a bus interface unit 309 for communicating between the processor 302, the memory 304, a display system 324, and the I/O bus interface unit 310. The I/O bus interface unit 310 may be coupled with the I/O bus 308 for transferring data to and from the various I/O units. The I/O bus interface unit 310 may communicate with a plurality of I/O interface units 312, 314, 316, and 318, also known as I/O processors (IOPs) or I/O adapters (IOAs), via the I/O bus 308.

The display system 324 may include a display controller, a display memory, or both. The display controller may provide video, audio, or both types of data to the display device 326. Further, the computer system 300 may also include a device, such as one or more sensors, configured to collect data and provide the data to the processor 302.

For example, the computer system 300 may include biometric sensors that collect heart rate data, stress level data, and the like, environmental sensors that collect humidity data, temperature data, pressure data, and the like, and motion sensors that collect acceleration data, movement data, and the like. Other types of sensors may be used. The display system 324 may be connected to a display device 326, such as a single display screen, television, tablet, or portable device.

The I/O interface unit is capable of communicating with a variety of storage and I/O devices. For example, the terminal interface unit 312 supports the attachment of a user I/O device 320, which may include user output devices such as a video display device, a speaker, a television or the like, and user input devices such as a keyboard, mouse, keypad, touchpad, trackball, buttons, light pens, or other pointing devices or the like. A user may use the user interface to operate the user input device to input input data and instructions to the user I/O device 320 and the computer system 300 and receive output data from the computer system 300. The user interface may be presented via the user I/O device 320, such as displayed on a display device, played via a speaker, or printed via a printer.

The storage interface 314 supports the attachment of one or more disk drives or direct access storage devices 322 (which are typically magnetic disk drive storage devices, but may be arrays of disk drives or other storage devices configured to appear as a single disk drive). In some embodiments, the storage device 322 may be implemented as any secondary storage device. The contents of the memory 304 are stored in the storage device 322 and may be read from the storage device 322 as needed. The I/O device interface 316 may provide an interface to other I/O devices such as printers, fax machines, and the like. The network interface 318 may provide a communication path so that computer system 300 and other devices can communicate with each other. The communication path may be, for example, the network 330.

In some embodiments, the computer system 300 may be a multi-user mainframe computer system, a single user system, or a server computer or the like that has no direct user interface and receives requests from other computer systems (clients). In other embodiments, the computer system 300 may be a desktop computer, a portable computer, a notebook computer, a tablet computer, a pocket computer, a telephone, a smart phone, or any other suitable electronic device.

Next, a hardware configuration of the maintenance assistance system according to the embodiments of the present invention will be described with reference to FIG. 2.

FIG. 2 is a diagram illustrating an example of a hardware configuration of a maintenance assistance system according to the embodiments of the present invention. As illustrated in FIG. 2, the maintenance assistance system 360 primarily comprises a communication network 365, monitoring target equipment 370, a sensor 375, a storage device 380, and a maintenance assistance device 385. The monitoring target equipment 370, the sensor 375, the storage device 380, and the maintenance assistance device 385 are connected to each other via the communication network 365.

The communication network 365 may include, for example, a local area network (LAN), a wide area network (WAN), a satellite network, a cable network, a WiFi network, or any combination thereof. The connection of the monitoring target equipment 370, the sensor 375, the storage device 380, and the maintenance assistance device 385 may be wired, or it may be wireless.

The monitoring target equipment 370 is a device for fulfilling a specific purpose in social infrastructure such as electric power, railways, water supply and sewerage, urban transportation, or the like. The monitoring target equipment 370 may be, for example, a control system such as an air conditioner, an escalator, an elevator, a factory device, a machine tool, or the like. The monitoring target equipment 370 may be configured by one or more coupled or distributed control systems. In addition, the monitoring target equipment 370 may include a sensor 375, which will be described later.

It should be noted that a configuration is also possible in which the monitoring target equipment 370 is not directly connected to the communication network 365, and only the sensor 375 included in the monitoring target equipment 370 is connected to the communication network 365.

The sensor 375 is a device for acquiring information related to the above-described monitoring target equipment 370. Here, the type of the sensor 375 is not particularly limited, and may be appropriately selected and placed according to the use, function, and type of the monitoring target equipment 370. For example, if the monitoring target equipment 370 is an air conditioner, the sensor 375 may be a sensor configured to acquire data related to the state of components such as a compressor disposed within the air conditioner. As another example, the sensor 375 may be an environmental sensor that collects, for example, humidity data, temperature data, pressure data, and the like, or may be a motion sensor that collects acceleration data, motion data, and the like, but is not particularly limited hereto.

The storage device 380 is a storage unit for managing and storing various types of data used in the monitoring target equipment 370, the sensor 375, and the maintenance assistance device 385 via the communication network 365. The storage device 380 may be, for example, a local storage such as a Hard Disk Drive (HDD) or a Solid State Drive (SSD), or may be a cloud-type storage region accessible by the maintenance assistance device 385.

As illustrated in FIG. 2, the storage device 380 may store a historical data database 381, real-time monitoring data database 382, and a CLD formula and parameter database 383. Details of these various types of data will be described later.

The maintenance assistance device 385 is a device for determining whether or not an abnormality has occurred with respect to the monitoring target equipment 370, and supporting a swift response to the abnormality in the case that an abnormality is detected. As illustrated in FIG. 2, the maintenance assistance device 385 primarily includes a parameter generation unit 386, an abnormality determination unit 389, and a warning management unit 392.

The parameter generation unit 386 is a functional unit for generating an abnormality determination parameter used to determine whether or not an abnormality has occurred with respect to the monitoring target equipment 370.

As illustrated in FIG. 2, the parameter generation unit 386 includes an accuracy estimation unit 387 for estimating, using the first state data (for example, data of the historical data database 381) that is obtained from the sensor 375 and that relates to a state of the monitoring target equipment 370 and a causal structure model (for example, a causal structure model stored in the CLD formula and parameter database 383) corresponding to the sensor 375, a set of accuracy values that indicate the accuracy of the sensor 375, and a parameter identification unit 388 for identifying, by analyzing the first set of state data using abnormality determination parameter candidates that include values extracted from the set of accuracy values, an abnormality determination parameter from the abnormality determination parameter candidates that satisfies a predetermined abnormality detection rate criterion and a predetermined false alarm rate criterion, and storing the abnormality determination parameter in the storage device 380.

The abnormality determination unit 389 is a functional unit that determines whether or not an abnormality has occurred with respect to the monitoring target equipment 370 by analyzing a second state (for example, data of the real-time monitoring data database 382) transmitted from the sensor 375 using the abnormality determination parameter determined by the parameter generation unit 386.

As illustrated in FIG. 2, the abnormality determination unit 389 includes an accuracy estimation unit 390 for estimating, using a second set of state data (for example, data of the historical data database 381) from the sensor 375 that relates to a state of the monitoring target equipment 370 and a causal structure model (for example, a causal structure model stored in the CLD formula and parameter database 383) corresponding to the sensor 375, a set of accuracy values that indicate an accuracy of the sensor 375, and a data classification unit 391 for generating, by analyzing the second set of state data using the abnormality determination parameter, a data classification result that classifies the second set of state data into three categories of normal, abnormal, and noise, and outputting the data classification result.

The warning management unit 392 is a functional unit that provides notification of a warning regarding an abnormality in the case that an abnormality is detected with respect to the monitoring target equipment 370.

As illustrated in FIG. 2, the warning management unit 392 includes a warning generation unit 393 that generates a warning regarding an abnormality detected with respect to the monitoring target equipment 370 based on the data classification result generated by the abnormality determination unit 389, and a warning transmission unit 394 that provides notification to a predetermined third party (administrator, operator, or the like of the monitoring target equipment 370) of the warning.

It should be noted that each functional unit included in the maintenance assistance system 360 may be a software module constituting the maintenance assistance application 350 illustrated in FIG. 1, or may be an independent dedicated hardware device. In addition, the above-described functional units may be implemented in the same computing environment or may be implemented in a distributed computing environment. For example, the warning management unit 392 may be implemented in a remote server, and the other functional units may be implemented in the maintenance assistance device 385.

Next, the logical configuration of the maintenance assistance system according to the embodiments of the present invention will be described with reference to FIG. 3.

FIG. 3 is a diagram illustrating an example of the logical configuration of the maintenance assistance system 360 according to the embodiments of the present invention. As illustrated in FIG. 3, the maintenance assistance system 360 includes monitoring target equipment 370, a sensor 375, and a storage device 380, and a parameter generation unit 386, an abnormality determination unit 389, and a warning management unit 392 in the maintenance assistance device.

As the basic flow of the maintenance assistance system 360 according to the embodiments of the present disclosure, the parameter generation unit 386 generates an abnormality determination parameter based on historical data (for example, the "historical data database 381" in the Figures) relating to the monitoring target equipment 370 that was acquired from the sensor 375, and thereafter, the abnormality determination unit 389 analyzes, using the abnormality determination parameter, real-time monitoring data (for example, the "real-time monitoring data database 382" in the Figures) relating to the monitoring target equipment 370 that is acquired from the sensor 375, thereby classifying the analyzed data into categories of normal, abnormal, noise, or the like. The details of this flow will be described below.

As described above, the maintenance assistance system 360 according to the embodiments of the present disclosure includes a storage device 380, and the storage device 380 includes a historical data database 381, a real-time monitoring data database 382, and a CLD formula and parameter database 383.

The historical data database 381 is past data acquired for the monitoring target equipment 370 via the sensor 375, and serves as learning data for determining an abnormality determination parameter according to the embodiments of the present disclosure. The historical data database 381 may be data acquired for any time period, such as the past one month, the past six months, the past one year, or the like, for example.

In addition, the historical data database 381 includes an abnormality data database 405 indicating a record of past abnormalities, a normal data database 407 indicating data from which the records of past abnormalities has been removed, and an overall monitoring data database 406 that includes all of the historical abnormal, noise, and historical normal data.

The CLD formula and parameter database 383 includes causal structure formulas (hereinafter referred to as "Causal Loop Diagram Formulas," or CLD formulas) derived from the causal structure models corresponding to the monitoring target equipment 370, and abnormality determination parameters generated for each respective CLD formula. It should be noted that these CLD formulas and parameters will be described later.

The real-time monitoring data database 382 is real-time monitoring data acquired for the monitoring target equipment 370 via the sensor 375. This real-time data may be, for example, data currently acquired from the sensor 375 (for example, within a predetermined time) and delivered to the maintenance assistance device, unlike the previously acquired historical data database 381.

First, at Step S401, the parameter generation unit 386 acquires the CLD formula (C[i]) for each sensor provided in the monitoring target equipment 370. The CLD formula for each sensor obtained here is a formula for calculating a predicted value of data measured by a sensor for each sensor provided in the monitoring target equipment 370. In the case that a CLD formula has already been generated for each sensor and stored in the CLD formula and parameter database 383, then at Step S401, the parameter generation unit 386 may obtain the CLD formula corresponding to each sensor from the CLD formula and parameter database 383. In addition, if a CLD formula corresponding to each sensor has not yet been generated, then at Step S401, the parameter generation unit 386 may newly generate a CLD formula corresponding to each sensor.

At Step S402, the parameter generation unit 386 calculates, for each sensor provided in the monitoring target equipment 370, the accuracy value P[j] of a given sensor using the CLD formula acquired in Step S401 and the overall monitoring data database 406. The accuracy value P[j] of a particular sensor [j] is obtained from the following Equation 1.

[Equation 1]

$$P[j] = 1 - \frac{|c - r|}{|r|}$$

Here, c is the predicted value of the sensor determined from the CLD formula, and r is the actual measured value of the sensor obtained from the overall monitoring data database 406.

In Step S403, the parameter generation unit 386 calculates, for each sensor, the standard error σ[j] of the accuracy values of the sensor using the CLD formula acquired in Step S401 and the overall monitoring data database 406. The calculation of the standard error here may be calculated using existing means and is not particularly limited.

At Step S404, the parameter generation unit 386 determines an abnormality determination parameter for each sensor based on the abnormality data database 405, the accuracy value P [j] of each sensor calculated at Step S402, and the standard error σ[j] of the accuracy value of each sensor calculated at Step S403.

It should be noted that here, the abnormality determination parameter includes an accuracy threshold value Th[j] of a particular sensor [j], a standard error σ[j] of the accuracy, a predetermined interval M, and the number N of data points that satisfy the accuracy threshold value in the predetermined interval. The details of the processing for determining the abnormality determination parameter will be described later.

At Step S405, the parameter generation unit 386 calculates a detection rate (DR) and a false alarm rate (FAR) that represent the performance of the abnormality determination using the abnormality determination parameter determined at Step S404.

According to the above process, it is possible to determine parameters for efficiently determining whether or not an abnormality has occurred with respect to a particular monitoring target equipment 370. By analyzing the real-time monitoring data acquired for monitoring target equipment 370 via the sensor 375 using the determined abnormality determination parameter, the analyzed data can be classified into categories such as normal, abnormal, and noise. The details of this flow will be described below.

Next, at Step S406, the abnormality determination unit 389 calculates, for each sensor, a real-time accuracy value PR[j] of that sensor using the real-time monitoring data database 382 acquired via the sensor 375.

At Step S407, the abnormality determination unit 389 analyzes the real-time monitoring data database 382 using the abnormality determination parameter determined at Step S404, thereby identifying the normal values, the noisy values, and the abnormal values in the real-time monitoring data.

At Step S408, the abnormality determination unit 389 outputs, as a determination result of Step S407, a data classification result obtained by classifying the analyzed real-time monitoring data database 382 into categories such as normal, noise, and abnormal to the warning management unit 392.

At Step S409, the warning management unit 392 generates a warning regarding the abnormality detected with respect to the monitoring target equipment 370 based on the data classification result generated at Step S408.

At Step S410, the warning management unit 392 notifies a predetermined third party, such as an administrator or an operator of the monitoring target equipment 370, of the warning generated at Step S409.

According to the above process, it is possible to provide a maintenance assistance technique for classifying data into categories such as normal, noise, and abnormal by efficiently determining an abnormality determination parameter for determining whether or not an abnormality has occurred with respect to monitoring target equipment using a CLD model that indicates causal relationships between sensors, and analyzing the data acquired from the sensors in real time using the determined abnormality determination parameter.

Next, a diagram illustrating an example of the monitoring data acquired by the sensors according to the embodiments of the present invention will be described with reference to FIG. 4.

FIG. 4 is a diagram illustrating an example of the overall monitoring data database 406 acquired by the sensors according to the embodiments of the present disclosure. The overall monitoring data database 406 illustrated in FIG. 4 is an example of raw (that is, unprocessed) data acquired by the sensor 375 described with reference to FIG. 2 and FIG. 3, for example.

As illustrated in FIG. 4, the overall monitoring data database 406 includes, for example, measurement date and time information 422 that indicates the measurement date and time, a sensor identifier 424 that uniquely identifies a sensor, and a measurement value 426 of the sensor.

It should be noted that values corresponding to noise, normal values, and abnormal values are mixed together in the overall monitoring data database 406. Accordingly, by processing the overall monitoring data database 406 using the maintenance assistance unit according to the embodiments of the present disclosure, the noise values, the normal values, and the abnormal values can be respectively identified, and maintenance operations of the monitoring target equipment 370 can be facilitated.

Next, the historical abnormality data according to the embodiments of the present invention will be described with reference to FIG. 5.

FIG. 5 is a diagram illustrating an example of a historical abnormality data database 405 according to the embodiments of the present disclosure. The historical abnormality data database 405 illustrated in FIG. 5 is a portion of the historical data database 381 stored in the storage device 380 illustrated in FIG. 2 and FIG. 3, and corresponds to the values determined to be abnormalities from among the overall monitoring data database 406 described with reference to FIG. 4.

As illustrated in FIG. 5, the historical abnormality data database 405 includes an ID 430 for uniquely identifying each abnormality, an abnormality occurrence date and time 431 that indicates the date and time when the abnormality occurred, an abnormality resolution date and time 432 that indicates the date and time when the abnormality was resolved, and a maintenance operation 433 that indicates the content of the maintenance operation performed to resolve the abnormality.

For example, as illustrated in FIG. 5, the abnormality corresponding to "A8" occurred at 21:00 on October 11, 2018, and was resolved by a maintenance operation of compressor replacement at 2:30 on October 12, 2018.

As described above, in the process of determining the abnormality determination parameters for determining whether or not an abnormality has occurred, the accuracy values P[j] of the sensors and the standard error σ[j] of the accuracy values of the sensors can be calculated based on the historical abnormality data database 405 illustrated in FIG. 5.

Next, the equipment according to the embodiments of the present invention and the CLD formula and abnormality determination parameters will be described with reference to FIG. 6.

FIG. 6 is a diagram illustrating an example of the configuration of the CLD formula and parameter database 383 according to the embodiments of the present disclosure. The CLD formula and parameter database 383 illustrated in FIG. 6 correspond to, for example, the CLD formula and parameter database 383 stored in the storage device 380 illustrated in FIG. 2 and FIG. 3.

As illustrated in FIG. 6, the CLD formula and parameter database 383 includes an equipment name 601 that indicates the name of the monitoring target equipment, a CLD formula 602, a threshold value 604, a standard error 606, a predetermined interval M 610, and the number N 608 of data points that satisfy the accuracy threshold value in the predetermined interval.

As described above, the CLD formula is a regression formula derived from a causal structure model in which causal relationships between operational data obtained from a large number of sensors configured to monitor monitoring target equipment (for example, the monitoring target equipment 370 illustrated in FIG. 2 and FIG. 3) are represented by a directed acyclic graph. Each term in this regression formula represents a cause that affects a given result. By using these CLD formulas, it is possible to calculate, for each sensor provided in the monitoring target equipment, the predicted values of data measured by a given sensor, taking into account the causal relationships with other operational data.

It should be noted that the CLD formulas here may be regression formulas acquired from a causal structure model generated in advance with respect to the monitoring target equipment, but the technique for generating the CLD formulas is not particularly limited. As one method of generating the causal structure model, for example, a work improvement support device (not illustrated in the Figures) for estimating a structural causal model among working data on the basis of predetermined working data (for example, historical data acquired by the sensors provided in monitoring target equipment) may include performing a process of calculating a nonlinear value as for the working data and adding the nonlinear value to the working data, a process of calculating a regression formula for the respective working data according to the multiple linear regression analysis, a process of determining whether there is a linear term in the calculated regression formula and setting the predetermined data comprising the linear term and the objective variable of the regression formula as the same group, and a process of selecting the working data excluding the predetermined data as explanatory variable candidates for the multiple linear regression analysis (see JP No. 2018-156346).

As illustrated in FIG. 6, one monitoring target equipment name 601 may be associated with a plurality of CLD formulas 602. For example, for each sensor provided in the monitoring target equipment, a CLD formula 602 for calculating a predicted value of the data to be measured by that sensor may be generated. Also, as illustrated in FIG. 6, each CLD formula 602 is associated with an accuracy threshold value 604 for that CLD formula and a standard error 606. As will be described below, if the accuracy of a sensor meets (that is, falls below) the accuracy threshold value 604, an abnormality may have appeared with respect to the sensor.

In addition, for each equipment name 601, a predetermined interval M 610 used in the abnormality determination process to be described later and a number N 608 of data points that satisfy the accuracy threshold in the predetermined interval M 610 are established. The predetermined interval M 610 and the number N 608 of data points are identical for the same type of equipment (for example, in the case that a plurality of air conditioners having the same model number are installed, the predetermined interval M 610 and the number N 608 of data points used for the abnormality determination of each air conditioner are the same).

The process of determining the predetermined interval M 610 and the number N 608 of data points will be described later.

Next, the configuration of the real-time monitoring data database according to the embodiments of the present invention will be described with reference to FIG. 7.

FIG. 7 is a diagram illustrating an example configuration of the real-time monitoring data database 382 according to the embodiments of the present disclosure. The real-time monitoring data database 382 illustrated in FIG. 7 indicates the monitoring data acquired in real time by the above-described sensors for monitoring the monitoring target equipment, and the classification results (normal, noise, abnormal) of the monitoring data, and corresponds to the real-time monitoring data database 382 stored in the storage device 380 illustrated in FIG. 2 and FIG. 3.

As illustrated in FIG. 7, the real-time monitoring data database 382 includes an equipment name 701 that indicates the name of the monitoring target equipment, a CLD formula 702, a threshold value 704, a standard error 706, a predetermined interval M 710, the number N 708 of data points that satisfy the accuracy threshold value in the predetermined interval, and a date and time/state 712 that indicates the state of the equipment at a particular date and time.

It should be noted that the equipment name 701, the CLD formula 702, the threshold value 704, the standard error 706, the predetermined interval M 710, and the number N 708 of data points that satisfy the accuracy threshold value in the predetermined interval substantially correspond to the equipment name 601, the CLD formula 602, the threshold value 604, the standard error 606, the predetermined interval M 610, and the number N 608 of data points that satisfy the accuracy threshold value in the predetermined interval described with reference to FIG. 6, and therefore descriptions thereof are omitted here.

The date and time/state 712 is information that indicates the state of the monitoring target equipment at a specific date and time. In addition, as illustrated in FIG. 7, this state includes a state 712a for each CLD formula 702 and an overall state 712b of the equipment.

The state 712a for each CLD formula 702 is based on, for example, the data classification result generated by the abnormality determination unit (for example, the abnormality determination unit 389 illustrated in FIG. 2) described above, and designates the state of the equipment with respect to each CLD formula as a category such as "normal", "noise", or "abnormal."

The overall state 712b of the equipment is the overall state of the equipment as determined based on the state 712a for each CLD formula 702. If the state 712a for every CLD formula 702 is "normal" for one equipment, then the overall state 712b also becomes "normal." However, if the state 712a for one or more of the CLD formulas 702 is "noise" for one equipment, then the overall state 712b becomes "noise." In addition, if the state 712a of one or more CLD formulas 702 is "abnormal" for one equipment, the overall state 712b becomes "abnormal."

By managing the state for each of the CLD formulas corresponding to the monitoring target equipment as illustrated in the real-time monitoring data database 382 described above, in the case that an abnormality occurs, the cause of the abnormality can be quickly identified and dealt with.

Next, a specific example of a display screen according to the embodiments of the present invention will be described with reference to FIG. 8 to FIG. 9.

FIG. 8 is a diagram illustrating an example of an equipment state screen 800 according to the embodiments of the present invention. As described above, in the embodiments of the present invention, by analyzing the monitoring data acquired from the monitoring target equipment using the abnormality determination unit 389 illustrated in FIG. 2, the state of the equipment can be determined in real time for each CLD formula corresponding to the monitoring target equipment. Accordingly, by visualizing the state of the equipment determined here and displaying it on the equipment state screen 800, an administrator of the monitoring target equipment can easily confirm the state of the equipment.

As illustrated in FIG. 8, in the equipment state screen 800, a state 712a of the equipment at a specific time 801, the standard error 706 of each CLD formula 702, a predetermined interval M 710, a number N 708 of data points that satisfy the accuracy threshold value in the predetermined interval, and an overall state 712b of the equipment based on the state 712a of each CLD formula 702 is displayed for each CLD formula 702 for one equipment.

In addition, in the case that an abnormality is detected with respect to the monitoring target equipment, a user such as an administrator or an operator can confirm an abnormality confirmation screen 900 (see FIG. 9) showing detailed information about the detected abnormality by pressing the warning button 811.

FIG. 9 is a diagram illustrating an example of an abnormality confirmation screen 900 according to the embodiments of the present invention. The abnormality confirmation screen 900 is a screen for displaying detailed information of an abnormality in the case that an abnormality is detected with respect to monitoring target equipment.

As illustrated in FIG. 9, in the abnormality confirmation screen 900, the date and time/state 712 of the equipment corresponding to the CLD formula 702, the standard error 706 of the CLD formula 702, the predetermined interval M 710, and the number N 708 of data points that satisfy the accuracy threshold value in the predetermined interval are displayed for the equipment for which the abnormality is detected.

In addition, in the abnormality confirmation screen 900, an element 802 that indicates the cause of the abnormality among the terms constituting the CLD formula 702, a confirmation checkbox 803 indicating whether or not the cause of the abnormality has been verified, a maintenance completion button 804 indicating whether or not maintenance has been completed, and an additional information upload button 805 for uploading additional abnormality information are displayed.

For example, as illustrated in FIG. 9, information related to an abnormality detected in equipment of "Air Conditioner 2 " is displayed, and elements 802 "X12, X27, X114" indicating the causes of the abnormality are shown. Accordingly, the user (administrator, operator, or the like) who confirms the abnormality confirmation screen 900 may, for example, perform an on-site inspection of the "compressor replacement pressure, heater current, and set temperature," which are the items corresponding to the elements that caused the abnormality, and subsequently click the confirmation checkbox 803 corresponding to the confirmed items. In addition, the user may also click the maintenance completion button 804 after the maintenance tasks to resolve the detected abnormalities have been performed.

In addition, the user who has investigated the abnormalities on-site can upload additional information related to the abnormalities (photographs, descriptions, data acquired after the maintenance operation is performed, or the like) by clicking the additional information upload button 805.

In this way, in the case that an abnormality is detected in the monitoring target equipment, a user such as an administrator or an operator can easily confirm detailed information relating to the abnormality, the elements that caused the abnormality, or the like, and respond.

Next, referring to FIG. 10, an example of a data analysis screen 1000 according to the embodiments of the present invention is illustrated. Via the data analysis screen 1000 illustrated in FIG. 10, a user such as an administrator, an operator, or the like can upload data for use in determining the abnormality determination parameter for determining whether or not an abnormality has occurred with respect to the monitoring target equipment, or can analyze (classify into categories such as normal, abnormal, and noise) data acquired in real time by a sensor.

As illustrated in FIG. 10, the data analysis screen 1000 includes an upload button 1030 for uploading overall monitoring data 1010, an upload button 1040 for uploading abnormality data 1020, an analysis start button 1050, an analysis result confirmation button 1060, an abnormality detection performance confirmation button 1070, and a real-time monitoring application button 1080.

The upload button 1030 is a button for uploading the overall monitoring data 1010, which is the historical monitoring data previously acquired by the sensors for the monitoring target equipment (that is, including all of the abnormal, noise, and normal data) and stored in the overall monitoring data database 406 illustrated in FIG. 2, for example.

Here, the user can select the historical monitoring data to be used as learning data in the process of determining the abnormality determination parameter.

The upload button 1040 is a button for uploading the abnormality data 1020, which is stored in the abnormality data database 405 illustrated in FIG. 2, for example, and indicates the records of the abnormalities extracted from the historical monitoring data previously acquired by the sensors for the monitoring target equipment (that is, including all of the abnormal, noise, and normal data).

Here, the user can select the historical monitoring data to be used in the process of determining the abnormality determination parameter.

The analysis start button 1050 is a button for performing processing to determine, by analyzing the uploaded overall monitoring data 1010 and abnormality data 1020, abnormality determination parameters including the sensor accuracy threshold Th[j], the standard error of the accuracy, the predetermined interval M, the number N of data points that satisfy the accuracy threshold value in the predetermined interval, and the like for each sensor provided in the monitoring target equipment.

The analysis result confirmation button 1060 is a button for indicating the results of the analysis performed by the analysis start button 1050. By clicking the analysis result confirmation button 1060, a user such as an administrator or an operator of the monitoring target equipment can confirm the abnormality determination parameters (that is, the sensor accuracy threshold Th[j], the standard error of the accuracy, the predetermined interval M, and the number N of data points that satisfy the accuracy threshold value in the predetermined interval) determined for each CLD formula corresponding to the monitoring target equipment.

The abnormality detection performance confirmation button 1070 can be used to confirm indices that represent abnormality detection performance, such as the detection rate and the false alarm rate that result from the abnormality determination parameters determined by analyzing the overall monitoring data 1010 and the abnormality data 1020.

It should be noted that the indices of the abnormality detection performance will be described later (see FIG. 11).

The real-time monitoring application button 1080 is a button for applying the abnormality determination parameters determined by analyzing the overall monitoring data 1010 and the abnormality data 1020 to the real-time monitoring data acquired by the sensors. Users such as administrators or operators of the monitoring target equipment can determine in real time whether or not an abnormality has occurred with respect to the monitoring target equipment, and identify the cause of the abnormality.

Next, the abnormality detection performance according to the embodiments of the present invention will be described with reference to FIG. 11.

FIG. 11 is a diagram for explaining an example of abnormality detection performance indices according to the embodiments of the present invention. As described above, the purpose of the abnormality determination according to the embodiments of the present invention is to correctly determine the equipment with respect to which an abnormality has occurred, and the performance of this analysis is represented by the ability to correctly determine equipment for which an abnormality has occurred as "positive," and determine equipment for which an abnormality has not occurred as "negative." However, depending on the abnormality determination parameter, there is no guarantee that abnormalities will be determined correctly. Accordingly, in order to improve the performance of correctly determining abnormalities, it is desirable to determine, from among abnormality determination parameter candidates, abnormality determination parameters that satisfy a predetermined detection rate criterion and a false alarm rate criterion.

Hereinafter, abnormality detection performance indices will be described.

FIG. 11 illustrates a relationship between a true positive rate 1110, a false positive rate 1120, a false negative rate 1130, and a true negative rate 1140, which are abnormality detection performance indices.

The true positive rate 1110 (TP) is the rate at which an abnormality is correctly determined when an abnormality actually occurred with respect to equipment. The false positive rate 1120 (FP) is the rate at which abnormalities were erroneously determined to be present, despite the fact that no abnormalities actually occurred with respect to the equipment. The false negative rate 1130 (FN) is the rate at which an abnormality was erroneously determined to not be present, despite the fact that an abnormality has actually occurred with respect to the equipment. The true negative rate 1140 (TN) is the rate at which it can be correctly determined that an abnormality is not present when an abnormality has not actually occurred with respect to the equipment.

The false alarm rate (FAR) 1150 and the detection rate (DR) 1160 of the abnormality determination can be calculated from the abnormality detection performance indices described above. Here, the false alarm rate 1150 is the probability of erroneously providing notification of a warning despite there being no need to provide notification of a warning, and is calculated by the following Equation 2.

[Equation 2]

$$False\ Alarm\ Rate = \frac{FP}{(FP + TN)}$$

In addition, here, the detection rate is the probability that notification of a warning is correctly provided when provision of notification of a warning is necessary, and is calculated by the following Equation 3.

[Equation 3]

$$Detection\ Rate = \frac{TP}{(TP + FN)}$$

**As** described above, in order to improve the performance of correctly determining abnormalities, it is desirable to determine, from among the abnormality determination parameter candidates, abnormality determination parameters that satisfy a predetermined detection rate criterion and a false alarm rate criterion. The detection rate criterion and the false alarm rate criterion may be, for example, desired values set in advance by an administrator of the monitoring target equipment or the like. For example, as an example, the detection rate criterion may be set to "95% or more" and the false alarm rate criterion may be set to "0.1% or less".

It should be noted that the means for determining abnormality determination parameters that satisfy the detection rate criterion and the false alarm rate criterion will be described later.

Next, an abnormality determination parameter according to the embodiments of the present invention will be described with reference to FIG. 12.

FIG. 12 is a diagram illustrating the relationship between the abnormality determination parameters according to the embodiments of the present invention. In the graph 1200 illustrated in FIG. 12, the accuracy of a sensor calculated at a specific time is represented.

As described above, in the maintenance assistance technique according to the embodiments of the present invention, in order to improve the performance of correctly determining abnormalities, it is desirable to determine, from among the abnormality determination parameter candidates, abnormality determination parameters that satisfy a predetermined detection rate criterion and a false alarm rate criterion. In addition, here, the abnormality determination parameter at least includes an accuracy threshold value 1205 of a sensor represented by the horizontal dashed line in FIG. 12, a predetermined interval M 1203, and a number N of data points that satisfy the accuracy threshold value 1205 in the predetermined interval M 1203.

In order to determine a set of measured values 1201, 1202, 1204 as abnormal, the set of measured values 1201, 1202, 1204 must include at least N points that satisfy (in this case, fall below) the threshold value 1205 within the predetermined interval M 1203. Here the predetermined interval M 1203 may be a time (a period of 3 seconds, 4 seconds, 5 seconds, or the like), or a number of data points (5 points, 10 points, or the like).

It should be noted that, in the following description, for convenience of description, the unit (seconds, points, or the like) of the predetermined interval M may not be specified, but the unit of the predetermined interval may be arbitrarily selected.

Accordingly, as an example, if, for instance, the accuracy threshold value is the horizontal dashed line illustrated in the graph 1200, N is "3" and M is "4" seconds, then in order to determine a particular set of measured values as abnormal, the set of measured values must include at least 3 points that satisfy the threshold value 1205 within 4 seconds. Therefore, of the sets of measured values 1201, 1202, and 1204, only the set of measured values 1204 satisfies these conditions, and the sets of measured values 1201 and 1202 are determined as noise.

Next, a noise determination method according to the embodiments of the present invention will be described with reference to FIG. 13.

FIG. 13 is a diagram illustrating an example of a noise determination method according to the embodiments of the present invention. As described above, according to the present invention, by analyzing the monitoring data acquired by the sensors, the analyzed data can be classified into categories such as normal, abnormal, and noise. Hereinafter, an example of a noise determination method according to the embodiments of the present invention will be described.

In the graph 1300 illustrated in FIG. 13, the accuracy of a sensor calculated at a specific time is represented. In the noise determination method here, by comparing a reference difference D (1305) between a data point $P_1$ (1301) that serves as a given determination target and a predetermined number of data points ($P_{1-2}$, $P_{1-1}$, $P_{1+1}$, $P_{1+2}$) adjacent to the determination target data point $P_1$ (1301) with the standard error calculated for the CLD formula (for example, in Step S403 illustrated in FIG. 3), it is determined whether or not the determination target data point $P_1$ is noise.

Here, n1 (1302) illustrated in FIG. 13 is the number of data points to be compared with the given determination target data point $P_1$ (1301), and n2 (1303) is the number of data points required to determine a set of predetermined measurement values as abnormal.

It should be noted that, here, n1, n2, and D follow the relationships illustrated in Equations 4 to 6 below.

[Equation 4]

$$n2 < M$$

[Equation 5]

$$n1 \geq n2 + 1$$

[Equation 6]

$$D > Standard\ Error$$

For instance, as an example, in the case that n2 is "3" and n1 is "4," if the reference difference D between the determination target data point $P_1$ (1301) and each of the four data points ($P_{1-2}$, $P_{1-1}$, $P_{1+1}$, $P_{1+2}$) adjacent to the determination target data point $P_1$ (1301) is larger than the standard error (that is, $P_{1-2}$ > standard error, $P_{1-1}$ > standard error, $P_{1+1}$ > standard error, $P_{1+2}$ > standard error) calculated for the CLD formula (for example, in Step S403 illustrated in FIG. 3), the determination target data point $P_1$ (1301) is determined to be noise.

Next, with reference to FIG. 14, a process of determining an abnormality determination parameter for determining whether or not an abnormality has occurred with respect to monitoring target equipment in the maintenance assistance technique according to the embodiments of the present invention will be described.

FIG. 14 is a diagram illustrating the flow of a process 1400 for determining an abnormality determination parameter for determining whether or not an abnormality has occurred with respect to monitoring target equipment in the maintenance assistance technique according to the embodiments of the present invention. By performing the process 1400 for determining the abnormality determination parameter, it is possible to determine an abnormality determination parameter that satisfies a predetermined abnormality detection rate criterion and a predetermined false alarm rate criterion. In addition, the process 1400 for determining the abnormality determination parameter may be performed by the parameter generation unit 386 described with reference to FIG. 2 to FIG. 3, for example.

First, at Step S1401, the parameter generation unit acquires historical normal data for each sensor (for example, the data stored in the normal data database 407 illustrated in FIG. 3).

Next, at Step S1402, the parameter generator acquires CLD formulas (C[i]) for the sensors in the monitoring target equipment 370. As described above, in the case that CLD formulas have already been generated for each sensor and stored in the CLD formula and parameter database, at Step S1402, the parameter generation unit may acquire the CLD formulas corresponding to each sensor from the CLD formula and parameter database. In addition, in the case that CLD formulas corresponding to each sensor have not yet been generated, at Step S1402, the parameter generation unit may newly generate CLD formulas corresponding to each sensor by the technique described above.

Next, at Step S1403, the parameter generation unit calculates, for each sensor provided in the monitoring target equipment 370, the accuracy value P[j] of the sensors and the standard error σ[j] of the accuracy value P[j] using the CLD formulas acquired at Step S1402 and the historical normal data of each sensor acquired at Step S1401.

The accuracy value P[j] here is obtained from the above-described Equation 1.

Next, at Step S1404, the parameter generation unit determines whether or not there is an accuracy value that exceeds three times (that is, 3σ) the standard error (σ[j]) calculated at Step S1403 in the accuracy values P[j] generated at Step S1403.

Next, at Step S1405, in the case that it is determined that there is an accuracy value that exceeds three times the standard error (σ[j]) (that is, 3σ) at Step S1404, the parameter generation unit removes the accuracy values that exceed three times the standard error (σ[j]) (that is, 3σ) from the historical normal data used in Step S1401 (for example, the data stored in the normal data database 407 illustrated in FIG. 3). Subsequently, the process returns to Step S1402, and the processing after Step S1402 is performed using the corrected historical normal data.

Next, in Step S1406, the parameter generation unit calculates the accuracy values P[j] of the sensors provided in the monitoring target equipment using the CLD formulas acquired in Step S1402 and the overall monitoring data that includes all the historical abnormal, noise, and historical normal data (for example, the overall monitoring data database 406 illustrated in FIG. 3), and creates the accuracy list illustrated in FIG. 15.

It should be noted that the accuracy values P[j] calculated in this Step S1406 are different from the accuracy values calculated based only on the historical normal data at Step S1403, and are calculated based on the overall monitoring data that includes all the historical abnormal, noise, and historical normal data.

The accuracy values P[j] here are obtained from the above-mentioned Equation 1.

FIG. 15 is a diagram illustrating an example of an accuracy list 1500 for managing the accuracy values P[j] and the standard error of the sensors for each CLD formula calculated at Step 1406. As illustrated in FIG. 15, the accuracy list 1500 includes an equipment name 1501 that indicates the name of the monitoring target equipment, a CLD formula 1502, a time 1503, an accuracy value P(j, i) 1504, an accuracy value 1505, a standard error 1506, a predetermined interval M 1508, and the number N 1507 of data points that satisfy the accuracy threshold in the predetermined interval M 1508.

It should be noted that the "j" of the accuracy values P (j, i) here represents a specific sensor, and "i" represents a data point of the sensor "j" obtained at a certain time t.

As illustrated in FIG. 15, for each CLD formula 1502 associated with the monitoring target equipment (for example, air conditioner 1), the accuracy values 1505 and standard errors 1506 calculated at various times 1503 are indicated. It should be noted that, at the stage of Step S1406 in FIG. 14, since the standard error of the respective CLD formulas, the value of M, and the value of N are undetermined, the cells for the standard error 1506, the interval M 1508, and the number N 1507 of data points are blank in the accuracy list 1500 illustrated in FIG. 15.

As a result of the processing to be described later, abnormality determination parameters for determining whether or not an abnormality has occurred with respect to monitoring target equipment can be determined for each CLD formula based on the information illustrated in the accuracy list 1500.

Next, at Step S1407, the parameter generation unit sets the interval M to "1" and the standard error to the standard error σ[j] calculated at Step S1403 for each respective CLD formula in the accuracy list described above.

Next, at Step S1408, the parameter generation unit sets the number N of data points that satisfy the accuracy threshold to "1" in the above-described accuracy list.

Next, at Step S1409, the parameter generation unit sets the smallest value of the accuracy values to the threshold Th[j] in the above-described accuracy list.

Next, at Step S1410, the parameter generation unit analyzes the historical data (for example, the overall monitoring data database 406 illustrated in FIG. 3) using the above-described threshold Th[j] (for example, the value set at Step S1409), M, N, and the standard error set in the accuracy list as abnormality determination parameter candidates. More particularly, here, the parameter generation unit analyzes the historical data by the technique illustrated in FIG. 12 using the abnormality determination parameter candidates, thereby attempting to classify the abnormal values, normal values, and noise that exist in the historical data.

Next, at Step S1411, the parameter generation unit checks whether or not one or more abnormalities have been determined. In the case that one or more abnormalities have been determined, the process proceeds to Step S1413, and in the case that no abnormality has been determined, the process proceeds to Step S1412.

At Step S1412, the parameter generation unit removes (deletes) the smallest value of the accuracy values (that is, the value set as the threshold Th[j] at Step S1409) from the above-described accuracy list. Subsequently, the process returns to Step S1409, and the smallest value of the accuracy values is set as the threshold Th[j] from the corrected accuracy list, and the processing of Step S1410 and the subsequent steps are performed.

At Step S1413, the parameter generation unit determines whether or not a record of an abnormality exists in the historical abnormality data (for example, the abnormality data database 405 illustrated in FIG. 3) for the CLD formula for which the abnormality has been determined. In the case that a record of abnormality exists in the historical abnormality data with respect to the CLD formula for which an abnormality has been determined, the process proceeds to Step S1414, and in the case that a record of an abnormality does not exist in the historical abnormality data, the process proceeds to Step S1416.

At Step S1414, the parameter generation unit performs a process of verifying the abnormality determined by analyzing at Step S1410. Details of this processing will be described later (see FIG.16).

At Step S1415, the parameter generation unit determines whether or not the detection rate of the abnormality determination parameter candidates calculated in the processing of Step S1414 achieve a predetermined detection rate criterion. In the case that the detection rate of an abnormality determination parameter candidate achieves the predetermined detection rate criterion, the process proceeds to Step S1420, and in the case that the detection rate of an abnormality determination parameter candidate does not achieve the predetermined detection rate criterion, the process proceeds to Step S1412.

In Step S1416, in the case that it is determined that a record of an abnormality does not exist in the historical abnormality data for the CLD formula for which the abnormality was determined at Step S1413, the parameter generation unit determines whether or not one or more abnormalities have been determined for the threshold values used in past (previous) S1410 analyses. In the case that one or more abnormalities have been determined with respect to the previous threshold value, or if the analysis of S1410 has not been previously performed (that is, the current process is being performed for the first time, and there is no previously used threshold value, for instance), the process proceeds to Step S1417, and in the case that one or more abnormalities have not been determined with respect to the previous threshold, the process proceeds to Step S1421.

At Step S1417, the parameter generation unit determines whether the value of N and the value of M are the same in the present accuracy list (that is, whether or not N=M). In the case that the value of N and the value of M are the same, the process proceeds to Step S1419, and in the case that the value of N and the value of M are not the same, the process proceeds to Step S1418.

At Step S1418, the parameter generation unit increments the value of N by one in the accuracy list (that is, N is set to N+1). Subsequently, the process returns to Step S1409.

At Step S1419, the parameter generation unit increments the value of M by one in the accuracy list (that is, M is set to M+1). Subsequently, the process returns to Step S1408.

At Step S1420, the parameter generation unit determines whether or not the false alarm rate resulting from an abnormality determination parameter candidate, which is calculated in the processing of Step S1414, achieves the predetermined false alarm rate criterion. In the case that the false alarm rate resulting from an abnormality determination parameter candidate achieves the predetermined false alarm rate criterion, the process proceeds to Step S1421, and in the case that the false alarm rate resulting from an abnormality determination parameter candidate does not achieve the predetermined false alarm rate criterion, the process returns to Step S1417.

At Step S1421, the parameter generation unit determines the abnormality determination parameter candidate (that is, the threshold value, standard error, M, and N set in Step S1410) as the abnormality determination parameter to be used for abnormality determination of the monitoring data acquired in real time, and outputs this parameter. Here, the parameter generation unit may store the determined abnormality determination parameter in a CLD formula and parameter database (for example the CLD equation and parameter database 383 illustrated in FIG. 3).

By performing the abnormality determination parameter determination process described above, it is possible to determine an optimum abnormality determination parameter for classifying the monitoring data acquired with respect to the monitoring target equipment into categories such as normal, noise, and abnormal.

Next, the abnormality verification process according to the embodiments of the present invention will be described with reference to FIG.16.

FIG. 16 is a diagram illustrating an example of the flow of the abnormality verification process according to the embodiments of the present invention. As described above, in the abnormality determination parameter determination processing according to the embodiments of the present invention, in the case that an abnormality is determined as a result of analyzing historical data using a particular abnormality determination parameter candidate, it is desirable to verify the abnormality. Hereinafter, the abnormality verification process will be described.

First, at Step S1601, the parameter generation unit acquires the historical normal data of the sensors (that is, the data stored in the normal data database 407 illustrated in FIG. 3).

It should be noted that Step S1601 in FIG. 16 substantially corresponds to Step S1401 in FIG. 14 described above.

Next, at Step S1602, the parameter generation unit acquires the CLD formula (C[i]) for the sensors in the monitoring target equipment 370.

Since Step S1602 in FIG. 16 substantially corresponds to Step S1402 in FIG. 14 described above, the explanation thereof is omitted here.

Next, at Step S1603, the parameter generation unit calculates, for each sensor provided in the monitoring target equipment, the accuracy value P[j] of the sensors using the historical normal data of each sensor acquired at Step S1601 and the CLD formulas acquired at Step S1602, and creates the accuracy list described above (for example, the accuracy list 1500 illustrated in FIG. 15)

Next, at Step S1604, the parameter generation unit selects a data point P[j,i] in the accuracy list generated in Step S1603. Here, "i" follows the relationship illustrated in Equation 7 below.

[Equation 7]

$$i > M - 1$$

It should be noted that M here is the value used in the analysis of Step S1410 in FIG. 14 described above.

Next, at Step S1605, the parameter generation unit selects M accuracy value points in the above-described accuracy list (alternatively, the data points in the last four seconds). The accuracy values of the M points selected here include P(j, i), P(j,i-1)... P(j,i-(M-1)).

Next, at Step S1606, the parameter generation unit determines, with respect to each sensor, whether noise is present in the M data points selected in Step S1605. The confirmation of the noise may be performed by, for example, the noise determination technique described with reference to FIG. 13. In the case that noise is present in the M data points selected in Step S1605, the process proceeds to Step S1607, and in the case that no noise is present in the M data points selected in Step S1605, the process proceeds to Step S1608.

In Step S1607, in the case that it is determined that noise is present in the M data points selected in Step S1606, or alternatively in the case that there are not N data points that achieve the threshold value Th[i] in the M data points selected in Step S1608 to be described later, the parameter generation unit determines that the selected data point P(j,i) is "normal", and assigns a label in the accuracy list indicating that P(j,i) is normal.

In Step S1608, in the case that it is determined in Step S1606 that noise is not present in the selected M data points, the parameter generation unit determines whether or not there are N data points that achieve the threshold value Th [i] in the M data points. In the case that there are N data points that achieve the threshold value Th[i] in the M data points, the process proceeds to Step S1609, and in the case that there are not N data points that achieve the threshold value Th[i] in the M data points, the process proceeds to Step 1607.

In Step S1609, in the case that it is determined in Step S1608 that there are N data points that achieve the threshold value Th[i] in the M data points, the parameter generation unit determines that the data point P(j,i) is "abnormal" and assigns a label in the accuracy list indicating that P(j,i) is abnormal.

Next, at Step S1610, the parameter generation unit determines whether or not the abnormality verification process has been completed for all the data points in the accuracy list. In the case that the abnormality verification process has not been completed for all the data points in the accuracy list, the process proceeds to Step S1611, and in the case that the abnormality verification process has been completed for all the data points in the accuracy list, the process proceeds to Step S1612.

At Step S1611, the parameter generation unit increments the data point accuracy value P[i] selected in Step S1603 by one (that is, sets i to i+1), the process returns to Step S1605, and the processing of Step S1605 and subsequent steps are performed to verify the subsequent data point P[i+1].

At step S1612, the parameter generation unit calculates and outputs the detection rate and the false alarm rate resulting from the abnormality determination parameter candidates (that is, the threshold value, standard error, M, and N set in Step S1410) used for the present abnormality verification based on the historical abnormality data (for example, the abnormality data database 405 illustrated in FIG. 3) and the labels assigned in Step S1607 and Step S1609. The detection rate and the false alarm rate calculated here may be stored in, for example, the CLD formula and parameter database described above (for example, the CLD formula and parameter database 383 illustrated in FIG. 2).

Next, the real-time abnormality determination processing according to the embodiments of the present invention will be described with reference to FIG. 17.

FIG. 17 is a diagram illustrating an example of the flow of the real-time abnormality determination process according to the embodiments of the present invention. As described above, the real-time monitoring data is analyzed using the abnormality determination parameter determined by the abnormality determination parameter determination process illustrated in FIG. 14, and the analyzed data is classified into categories such as normal, abnormal, and noise. Hereinafter, the flow of the real-time abnormality determination process will be described.

It should be noted that the real-time abnormality determination process described below may be performed by, for example, the abnormality determination unit 389 illustrated in FIG. 2 described above.

First, at Step S1701, the abnormality determination unit acquires real-time monitoring data (for example, the data stored in the real-time monitoring data database 382 illustrated in FIG. 3) from each respective sensor. As described above, the real-time monitoring data here may be, for example, data acquired by each sensor provided in the monitoring target equipment and dynamically transmitted to the maintenance assistance device.

Next, at Step S1702, the abnormality determination unit acquires the CLD formula (C[i]) for the sensors in the monitoring target equipment.

It should be noted that, since the Step S1702 in FIG. 17 substantially corresponds to Step S1402 in FIG. 14 described above, the explanation thereof is omitted here.

Next, at Step S1703, the abnormality determination unit calculates, for each sensor, the real-time accuracy value PR[j, i] of that sensor using the real-time monitoring data acquired via the sensor and creates a real-time accuracy list. The accuracy list here substantially corresponds to the accuracy list described with reference to FIG. 15, but differs from the accuracy list illustrated in FIG. 15 in that the accuracy values of the real-time accuracy list created here are calculated based on the real-time data currently acquired in real-time rather than on historical data.

Next, at Step S1704, the abnormality determination unit selects M accuracy value points including a target data point P(j, i) in the real-time accuracy list described above. The accuracy values of the M points selected here include P(j, i), P(j,i-1)... P(j,i-(M-1)).

It should be noted that here, M is the value of M determined by the abnormality determination parameter determination process of FIG. 14 described above.

Next, at Step S1705, the abnormality determination unit sets the abnormality determination parameters M,N, the threshold value, and the standard error in the real-time accuracy list described above.

The abnormality determination parameters M,N, the threshold value, and the standard error set here are the values determined by the abnormality determination parameter determination process of FIG. 14 described above.

Next, at Step S1706, the abnormality determination unit determines, for each sensor, whether noise is present in the M data points selected in the step S1704. The confirmation of the noise may be performed by, for example, the noise determination means described with reference to FIG. 13. If noise is present in the M data points selected in Step S1704, the process proceeds to Step S1708, and if noise is not present at the M data points selected in Step S1704, the process proceeds to Step S1707.

Next, at Step S1707, in the case that it is determined in Step S1706 that noise is not present in the selected M data points, the abnormality determination unit determines whether or not there are N data points that achieve the threshold value Th[i] in the M data points. In the case that there are N data points that achieve the threshold value Th[i] in the M data points, the process proceeds to Step S1710, and in the case that there are not N data points that achieve the threshold value Th[i] in the M data points, the process proceeds to Step 1709.

FIG. 18 is a diagram illustrating an example of an abnormality determination according to the embodiments of the present invention, as performed in Steps S1706 to S1717 described above, for example. In the example illustrated in FIG. 18, the horizontal dashed line represents the threshold value 1730, N is "2" and M is "3." In the case of determining whether or not the target data point P 1 (1732) is abnormal, it is first determined whether or not there is noise in the last M (3) points (that is, P1, P2, P3). In the case that there is no noise, then it is determined whether there are at least N (2) points among these M (3) points that satisfy (that is, fall below) the threshold value 1730.

In the example illustrated in FIG. 18, among the M (3) points, only the single point P3 satisfies the threshold value, and therefore P 1 is determined to be normal.

At Step S1708, in the case that it is determined in Step S1706 that noise exists at the data point P(j,i) of the selected M points, the abnormality determination unit determines that the selected data point P(j,i) is "noise," and assigns a label in the accuracy list indicating that P(j,i) is noise.

At Step S1709, in the case that it is determined in S1707 that there are not N data points that achieve the threshold value Th[i] in the M data points, the abnormality determination unit determines that the selected data point P(j,i) is "normal," and assigns a label in the accuracy list indicating that P(j,i) is normal.

At Step S1710, in the case that it is determined in Step S1707 that there are N data points that achieve the threshold Th[i] in the M data points, the abnormality determination unit determines that the data point P(j,i) is "abnormal" and assigns a label in the accuracy list indicating that P(j,i) is abnormal.

At Step S1711, the warning management unit generates a warning related to the data point to which the abnormal label was assigned in Step S1710, and outputs the warning to a predetermined user (an administrator, operator, or the like of the monitoring target equipment). In addition, an abnormality confirmation screen (see FIG. 9) illustrating detailed information related to the detected abnormality may be displayed on a predetermined user's terminal.

At Step S1712, since no abnormality has been detected, a countermeasure for the abnormality is not necessary. Here, the abnormality determination unit may transmit a notification indicating that the monitoring target equipment is operating normally to a predetermined user.

As described above, by applying the abnormality determination parameter determined by the abnormality determination parameter determination process according to the embodiments of the present invention to the analysis of the real-time monitoring data, it is possible to swiftly detect abnormalities for the monitoring target equipment, identify the cause, and respond to the abnormality.

Next, the flow of the maintenance operation according to the embodiments of the present invention will be described with reference to FIG. 19.

FIG. 19 is a diagram illustrating an example of the flow of a maintenance operation 1800 according to the embodiments of the present invention. The maintenance operation 1800 illustrated in FIG. 19 is a procedure performed, for example, after notification of a warning indicating an abnormality with respect to the monitoring target equipment has been provided.

First, at Step S1801, the warning management unit outputs a warning related to the detected abnormality (for example, by the abnormality determination process of FIG. 17 described above) to a predetermined user (an administrator, operator, or the like of the monitoring target equipment). The warning may include, for example, the equipment name E[b] for which the abnormality occurred and the element X[i] of the CLD formula associated with the abnormality.

Next, at Step S1802, the user who has received the warning output in Step S1801 performs an inspection of the equipment for which the abnormality has been detected based on the warning. The content of the inspection of the equipment may be appropriately selected depending on the type of the equipment and the nature of the abnormality.

Next, at Step S1803, as a result of the inspection by the operator in Step S1802, it is determined whether or not there was actually an abnormality with respect to the monitoring target equipment. In the case that there actually was an abnormality, the process proceeds to Step S1805, and in the case that there was not actually an abnormality, the process proceeds to Step S1804.

At Step S1804, in the case that it is determined that there is no abnormality as a result of the inspection by the operator in Step S1802, the operator reports the warning of the abnormality as a false alarm (for example, via the abnormality confirmation window illustrated in FIG. 9 described above).

At Step S1805, a user such as an operator resolves the abnormality of the monitoring target equipment E[b] using an appropriate technique.

At Step S1806, based on the false alarm reported in Step S1804, the detection rate and the false alarm rate resulting from the abnormality determination parameter used for the determination of the abnormality are calculated again.

At Step S1807, the detection rate and the false alarm rate calculated in Step S1806 are compared to predetermined criteria (the predetermined detection rate criterion and false alarm rate criterion ) to determine whether or not the criteria are satisfied. In the case that both the detection rate and the false alarm rate satisfy the predetermined criteria, the process proceeds to Step S1811, and in the case that one of either the detection rate or the false alarm rate does not satisfy the predetermined criteria, the process proceeds to Step S1808.

At Step S1808, the CLD formulas and abnormality determination parameters of the sensors are again generated by the abnormality determination parameter determination process 1400 illustrated in FIG. 14, for example.

At Step S1809, the CLD formulas and the abnormality determination parameters are generated again for the monitoring target equipment for which the abnormality has been resolved in Step S1805.

At Step S1810, the new CLD formulas and abnormality determination parameters generated in Step 1808 or Step S1809 are stored in the CLD formula and parameter database (for example, the CLD formula and parameter database 383 illustrated in FIG. 2).

According to the maintenance operation 1800 described above, in the case that an abnormality occurs with respect to the monitoring target equipment, the CLD formulas and the abnormality determination parameters corresponding to the monitoring target equipment are updated after the abnormality is handled, so that the abnormality determination performance of the maintenance assistance device can be further improved.

As described above, according to the present invention, it is possible to provide a maintenance assistance technique for classifying data into categories such as normal, noise, and abnormal by efficiently determining an abnormality determination parameter for determining whether or not an abnormality has occurred with respect to monitoring target equipment using a CLD model that indicates causal relationships between sensors, and analyzing the data acquired from the sensors in real time using the determined abnormality determination parameter.

[Reference Signs List]

360... Maintenance assistance system, 365... Communication network, 370... Monitoring target equipment, 375... Sensor, 380... Storage device, 381... Historical data database, 382... Real-time data, 383... CLD formula and parameter database, 385... Maintenance assistance device, 386... Parameter generation unit, 387... Accuracy estimation unit, 388... Parameter identification unit, 389... Abnormality determination unit, 390... Accuracy estimation unit, 391... Data classification unit, 392... Warning management unit, 393... Warning generation unit, 394... Warning transmission unit

## Claims

1. A maintenance assistance system (360) comprising:

    a set of sensors (375) for obtaining state data that relates to a state of monitoring target equipment (370);
    a maintenance assistance device (385) for determining whether or not an abnormality has occurred with respect to the monitoring target equipment (370); and
    a storage device (380) for storing at least the state data,
    wherein:
    the maintenance assistance device (385) includes:

        a parameter generation unit (386) for generating an abnormality determination parameter to be used for abnormality determination of the monitoring target equipment (370), and
        the parameter generation unit (386) includes:

            a first accuracy estimation unit (387) for estimating, using a first set of state data that is obtained from the set of sensors (375) and that relates to a state of the monitoring target equipment (370) and a causal structure model corresponding to the set of sensors (375), a set of accuracy values that indicate an accuracy of each sensor (375) included in the set of sensors (375), and
            a parameter identification unit (388) for identifying, by analyzing the first set of state data using abnormality determination parameter candidates that include values extracted from the set of accuracy values, an abnormality determination parameter from the abnormality determination parameter candidates that satisfies a predetermined abnormality detection rate criterion and a predetermined false alarm rate criterion, and storing the abnormality determination parameter in the storage device (380).

2. The maintenance assistance system (360) according to claim 1, wherein:

    the maintenance assistance device (385) includes an abnormality determination unit (389) for determining whether or not an abnormality has occurred with respect to the monitoring target equipment (370) using the abnormality determination parameter; and
    the abnormality determination unit (389) includes:

        a second accuracy estimation unit (390) for estimating, using a second set of state data from the set of sensors (375) that relates to a state of the monitoring target equipment (370) and a causal structure model corresponding to the set of sensors (375), a set of accuracy values that indicate an accuracy of each sensor (375) included in the set of sensors (375), and
        a data classification unit (391) for generating, by analyzing the second set of state data using the abnormality determination parameter, a data classification result that classifies the second set of state data into three categories of normal, abnormal, and noise, and outputting the data classification result.

3. The maintenance assistance system (360) according to claim 2, wherein the abnormality determination parameter includes an accuracy threshold value for a particular sensor (375), a standard error of the accuracy, a predetermined interval, and a number of data points that satisfy the accuracy threshold value in the predetermined interval.

4. The maintenance assistance system (360) according to claim 3, wherein the abnormality determination unit (389) determines, in a case that a set of data points equal to or greater than the number of data points that satisfy the accuracy threshold value in the predetermined interval are detected, that the set of data points detected is abnormal.

5. The maintenance assistance system (360) according to claim 4, wherein the abnormality determination unit (389) regenerates, in a case that a set of data points corresponding to an abnormality is detected in the second set of state data, the causal structure model and the abnormality determination parameter for a sensor (375) corresponding to the set of data points determined to be abnormal.

6. The maintenance assistance system (360) according to claim 1, wherein the causal structure model includes a regression formula that represents a causal relationship between state data related to a state of the monitoring target equipment (370) acquired from the set of sensors (375).

7. A maintenance assistance method comprising:

receiving, from a set of sensors (375) configured to obtain state data that relates to a state of monitoring target equipment (370), a first set of state data that relates to a state of the monitoring target equipment (370);
estimating, using the first set of state data and a causal structure model corresponding to the set of sensors (375), a set of accuracy values that indicate an accuracy of each sensor (375) included in the set of sensors (375), and
identifying, by analyzing the first set of state data using abnormality determination parameter candidates that include values extracted from the set of accuracy values, an abnormality determination parameter from the abnormality determination parameter candidates that satisfies a predetermined abnormality detection rate criterion and a predetermined false alarm rate criterion.

8. The maintenance assistance method according to claim 7, further comprising:

receiving, from the set of sensors (375), a second set of state data that relates to a state of the monitoring target equipment (370),
estimating, using the second set of state data and a causal structure model corresponding to the set of sensors (375), a set of accuracy values that indicate an accuracy of each sensor (375) included in the set of sensors (375), and
generating, by analyzing the second set of state data using the abnormality determination parameter, a data classification result that classifies the second set of state data into three categories of normal, abnormal, and noise, and outputting the data classification result.

9. The maintenance assistance method according to claim 8, wherein the abnormality determination parameter includes an accuracy threshold value for a particular sensor (375), a standard error of the accuracy, a predetermined interval, and a number of data points that satisfy the accuracy threshold value in the predetermined interval.

10. The maintenance assistance method according to claim 9, further comprising:
determining, in a case that a set of data points equal to or greater than the number of data points that satisfy the accuracy threshold value in the predetermined interval are detected, that the set of data points detected is abnormal.

## Patentansprüche

1. Wartungsunterstützungssystem (360), umfassend:

einen Satz von Sensoren (375) zum Erhalten von Zustandsdaten, die sich auf einen Zustand einer Überwachungszielanlage (370) beziehen;
eine Wartungsunterstützungsvorrichtung (385) zum Bestimmen, ob eine Anomalie in Bezug auf die Überwachungszielanlage (370) aufgetreten ist oder nicht; und
eine Speichervorrichtung (380) zum Speichern mindestens der Zustandsdaten,
wobei:
die Wartungsunterstützungsvorrichtung (385) umfasst:

eine Parametererzeugungseinheit (386) zum Erzeugen eines Anomaliebestimmungsparameters, der zur Anomaliebestimmung der Überwachungszielanlage (370) zu verwenden ist, und
wobei die Parametererzeugungseinheit (386) umfasst:

eine erste Genauigkeitsschätzeinheit (387) zum Schätzen, unter Verwendung eines ersten Satzes von Zustandsdaten, die von dem Satz von Sensoren (375) erhalten werden und die sich auf einen Zustand der Überwachungszielanlage (370) beziehen, und eines kausalen Strukturmodells, das dem Satz von Sensoren (375) entspricht, eines Satzes von Genauigkeitswerten, die eine Genauigkeit jedes Sensors (375) angeben, der in dem Satz von Sensoren (375) enthalten ist, und
eine Parameteridentifikationseinheit (388) zum Identifizieren, durch Analysieren des ersten Satzes von Zustandsdaten unter Verwendung von Anomaliebestimmungsparameterkandidaten, die Werte umfassen, die aus dem Satz von Genauigkeitswerten extrahiert werden, eines Anomaliebestimmungsparameters aus den Anomaliebestimmungsparameterkandidaten, der ein vorbestimmtes Anomaliedetektionsratenkriterium und ein vorbestimmtes Falschalarmratenkriterium erfüllt, und Speichern des Anomaliebestimmungsparameters in der Speichervorrichtung (380).

**2.** Wartungsunterstützungssystem (360) nach Anspruch 1, wobei:

die Wartungsunterstützungsvorrichtung (385) eine Anomaliebestimmungseinheit (389) zum Bestimmen, ob eine Anomalie in Bezug auf die Überwachungszielanlage (370) aufgetreten ist oder nicht, unter Verwendung des Anomaliebestimmungsparameters umfasst; und
wobei die Anomaliebestimmungseinheit (389) umfasst:

eine zweite Genauigkeitsschätzeinheit (390) zum Schätzen, unter Verwendung eines zweiten Satzes von Zustandsdaten von dem Satz von Sensoren (375), die sich auf einen Zustand der Überwachungszielanlage (370) beziehen, und eines kausalen Strukturmodells, das dem Satz von Sensoren (375) entspricht, eines Satzes von Genauigkeitswerten, die eine Genauigkeit jedes Sensors (375) angeben, der in dem Satz von Sensoren (375) enthalten ist, und
eine Datenklassifizierungseinheit (391) zum Erzeugen, durch Analysieren des zweiten Satzes von Zustandsdaten unter Verwendung des Anomaliebestimmungsparameters, eines Datenklassifizierungsergebnisses, das den zweiten Satz von Zustandsdaten in drei Kategorien normal, abnormal und Rauschen klassifiziert, und Ausgeben des Datenklassifizierungsergebnisses.

**3.** Wartungsunterstützungssystem (360) nach Anspruch 2, wobei der Anomaliebestimmungsparameter einen Genauigkeitsschwellenwert für einen bestimmten Sensor (375), einen Standardfehler der Genauigkeit, ein vorbestimmtes Intervall und eine Anzahl von Datenpunkten, die den Genauigkeitsschwellenwert in dem vorbestimmten Intervall erfüllen, umfasst.

**4.** Wartungsunterstützungssystem (360) nach Anspruch 3, wobei die Anomaliebestimmungseinheit (389) in einem Fall, in dem ein Satz von Datenpunkten gleich oder größer als die Anzahl von Datenpunkten, die den Genauigkeitsschwellenwert in dem vorbestimmten Intervall erfüllen, detektiert wird, bestimmt, dass der detektierte Satz von Datenpunkten abnormal ist.

**5.** Wartungsunterstützungssystem (360) nach Anspruch 4, wobei die Anomaliebestimmungseinheit (389) in einem Fall, in dem ein Satz von Datenpunkten, der einer Anomalie entspricht, in dem zweiten Satz von Zustandsdaten detektiert wird, das kausale Strukturmodell und den Anomaliebestimmungsparameter für einen Sensor (375), der dem Satz von Datenpunkten entspricht, der als abnormal bestimmt wurde, neu erzeugt.

**6.** Wartungsunterstützungssystem (360) nach Anspruch 1, wobei das kausale Strukturmodell eine Regressionsformel umfasst, die eine kausale Beziehung zwischen Zustandsdaten, die sich auf einen Zustand der Überwachungszielanlage (370) beziehen, die von dem Satz von Sensoren (375) erfasst werden, darstellt.

**7.** Wartungsunterstützungsverfahren, umfassend:

Empfangen, von einem Satz von Sensoren (375), die ausgebildet sind, um Zustandsdaten zu erhalten, die sich auf einen Zustand einer Überwachungszielanlage (370) beziehen, eines ersten Satzes von Zustandsdaten, die sich auf einen Zustand der Überwachungszielanlage (370) beziehen;
Schätzen, unter Verwendung des ersten Satzes von Zustandsdaten und eines kausalen Strukturmodells, das dem Satz von Sensoren (375) entspricht, eines Satzes von Genauigkeitswerten, die eine Genauigkeit jedes Sensors (375) angeben, der in dem Satz von Sensoren (375) enthalten ist, und
Identifizieren, durch Analysieren des ersten Satzes von Zustandsdaten unter Verwendung von Anomaliebestimmungsparameterkandidaten, die Werte umfassen, die aus dem Satz von Genauigkeitswerten extrahiert werden, eines Anomaliebestimmungsparameters aus den Anomaliebestimmungsparameterkandidaten, der ein vorbestimmtes Anomaliedetektionsratenkriterium und ein vorbestimmtes Falschalarmratenkriterium erfüllt.

**8.** Wartungsunterstützungsverfahren nach Anspruch 7, ferner umfassend:

Empfangen, von dem Satz von Sensoren (375), eines zweiten Satzes von Zustandsdaten, die sich auf einen Zustand der Überwachungszielanlage (370) beziehen,

Schätzen, unter Verwendung des zweiten Satzes von Zustandsdaten und eines kausalen Strukturmodells, das dem Satz von Sensoren (375) entspricht, eines Satzes von Genauigkeitswerten, die eine Genauigkeit jedes Sensors (375) angeben, der in dem Satz von Sensoren (375) enthalten ist, und

Erzeugen, durch Analysieren des zweiten Satzes von Zustandsdaten unter Verwendung des Anomaliebestimmungsparameters, eines Datenklassifizierungsergebnisses, das den zweiten Satz von Zustandsdaten in drei Kategorien normal, abnormal und Rauschen klassifiziert, und Ausgeben des Datenklassifizierungsergebnisses.

**9.** Wartungsunterstützungsverfahren nach Anspruch 8, wobei der Anomaliebestimmungsparameter einen Genauigkeitsschwellenwert für einen bestimmten Sensor (375), einen Standardfehler der Genauigkeit, ein vorbestimmtes Intervall und eine Anzahl von Datenpunkten, die den Genauigkeitsschwellenwert in dem vorbestimmten Intervall erfüllen, umfasst.

**10.** Wartungsunterstützungsverfahren nach Anspruch 9, ferner umfassend: Bestimmen, in einem Fall, in dem ein Satz von Datenpunkten gleich oder größer als die Anzahl von Datenpunkten, die den Genauigkeitsschwellenwert in dem vorbestimmten Intervall erfüllen, detektiert wird, dass der detektierte Satz von Datenpunkten abnormal ist.

## Revendications

**1.** Système d’aide à la maintenance (360) comprenant :

un ensemble de capteurs (375) pour obtenir des données d’état relatives à un état d’un équipement cible de surveillance (370) ;

un dispositif d’aide à la maintenance (385) pour déterminer si une anomalie s’est produite ou non par rapport à l’équipement cible de surveillance (370) ; et

un dispositif de stockage (380) pour stocker au moins les données d’état,

dans lequel :

le dispositif d’aide à la maintenance (385) comprend :

une unité de génération de paramètres (386) pour générer un paramètre de détermination d’anomalie devant être utilisé pour la détermination d’anomalie de l’équipement cible de surveillance (370), et

dans lequel l’unité de génération de paramètres (386) comprend :

une première unité d’estimation de précision (387) pour estimer, en utilisant un premier ensemble de données d’état obtenu de l’ensemble de capteurs (375) et relatif à un état de l’équipement cible de surveillance (370) et un modèle de structure causale correspondant à l’ensemble de capteurs (375), un ensemble de valeurs de précision indiquant une précision de chaque capteur (375) inclus dans l’ensemble de capteurs (375), et

une unité d’identification de paramètres (388) pour identifier, en analysant le premier ensemble de données d’état en utilisant des candidats de paramètre de détermination d’anomalie comprenant des valeurs extraites de l’ensemble de valeurs de précision, un paramètre de détermination d’anomalie parmi les candidats de paramètre de détermination d’anomalie qui satisfait un critère prédéterminé de taux de détection d’anomalie et un critère prédéterminé de taux de fausse alarme, et stocker le paramètre de détermination d’anomalie dans le dispositif de stockage (380).

**2.** Système d’aide à la maintenance (360) selon la revendication 1, dans lequel :

le dispositif d’aide à la maintenance (385) comprend une unité de détermination d’anomalie (389) pour déterminer si une anomalie s’est produite ou non par rapport à l’équipement cible de surveillance (370) en utilisant le paramètre de détermination d’anomalie ; et

dans lequel l’unité de détermination d’anomalie (389) comprend :

une deuxième unité d’estimation de précision (390) pour estimer, en utilisant un deuxième ensemble de données d’état provenant de l’ensemble de capteurs (375) relatif à un état de l’équipement cible de surveillance (370) et un modèle de structure causale correspondant à l’ensemble de capteurs (375), un ensemble de valeurs de précision indiquant une précision de chaque capteur (375) inclus dans l’ensemble de capteurs (375), et

une unité de classification de données (391) pour générer, en analysant le deuxième ensemble de données d'état en utilisant le paramètre de détermination d'anomalie, un résultat de classification de données qui classe le deuxième ensemble de données d'état en trois catégories normal, anormal et bruit, et délivrer le résultat de classification de données.

3. Système d'aide à la maintenance (360) selon la revendication 2, dans lequel le paramètre de détermination d'anomalie comprend une valeur de seuil de précision pour un capteur particulier (375), une erreur type de la précision, un intervalle prédéterminé et un nombre de points de données satisfaisant la valeur de seuil de précision dans l'intervalle prédéterminé.

4. Système d'aide à la maintenance (360) selon la revendication 3, dans lequel l'unité de détermination d'anomalie (389) détermine, dans le cas où un ensemble de points de données égal ou supérieur au nombre de points de données satisfaisant la valeur de seuil de précision dans l'intervalle prédéterminé est détecté, que l'ensemble de points de données détecté est anormal.

5. Système d'aide à la maintenance (360) selon la revendication 4, dans lequel l'unité de détermination d'anomalie (389) régénère, dans le cas où un ensemble de points de données correspondant à une anomalie est détecté dans le deuxième ensemble de données d'état, le modèle de structure causale et le paramètre de détermination d'anomalie pour un capteur (375) correspondant à l'ensemble de points de données déterminé comme étant anormal.

6. Système d'aide à la maintenance (360) selon la revendication 1, dans lequel le modèle de structure causale comprend une formule de régression qui représente une relation causale entre des données d'état relatives à un état de l'équipement cible de surveillance (370) acquises de l'ensemble de capteurs (375).

7. Procédé d'aide à la maintenance comprenant :

   recevoir, d'un ensemble de capteurs (375) configuré pour obtenir des données d'état relatives à un état d'un équipement cible de surveillance (370), un premier ensemble de données d'état relatif à un état de l'équipement cible de surveillance (370) ;
   estimer, en utilisant le premier ensemble de données d'état et un modèle de structure causale correspondant à l'ensemble de capteurs (375), un ensemble de valeurs de précision indiquant une précision de chaque capteur (375) inclus dans l'ensemble de capteurs (375), et
   identifier, en analysant le premier ensemble de données d'état en utilisant des candidats de paramètre de détermination d'anomalie comprenant des valeurs extraites de l'ensemble de valeurs de précision, un paramètre de détermination d'anomalie parmi les candidats de paramètre de détermination d'anomalie qui satisfait un critère prédéterminé de taux de détection d'anomalie et un critère prédéterminé de taux de fausse alarme.

8. Procédé d'aide à la maintenance selon la revendication 7, comprenant en outre :

   recevoir, de l'ensemble de capteurs (375), un deuxième ensemble de données d'état relatif à un état de l'équipement cible de surveillance (370),
   estimer, en utilisant le deuxième ensemble de données d'état et un modèle de structure causale correspondant à l'ensemble de capteurs (375), un ensemble de valeurs de précision indiquant une précision de chaque capteur (375) inclus dans l'ensemble de capteurs (375), et
   générer, en analysant le deuxième ensemble de données d'état en utilisant le paramètre de détermination d'anomalie, un résultat de classification de données qui classe le deuxième ensemble de données d'état en trois catégories normal, anormal et bruit, et délivrer le résultat de classification de données.

9. Procédé d'aide à la maintenance selon la revendication 8, dans lequel le paramètre de détermination d'anomalie comprend une valeur de seuil de précision pour un capteur particulier (375), une erreur type de la précision, un intervalle prédéterminé et un nombre de points de données satisfaisant la valeur de seuil de précision dans l'intervalle prédéterminé.

10. Procédé d'aide à la maintenance selon la revendication 9, comprenant en outre :
déterminer, dans le cas où un ensemble de points de données égal ou supérieur au nombre de points de données satisfaisant la valeur de seuil de précision dans l'intervalle prédéterminé est détecté, que l'ensemble de points de données détecté est anormal.

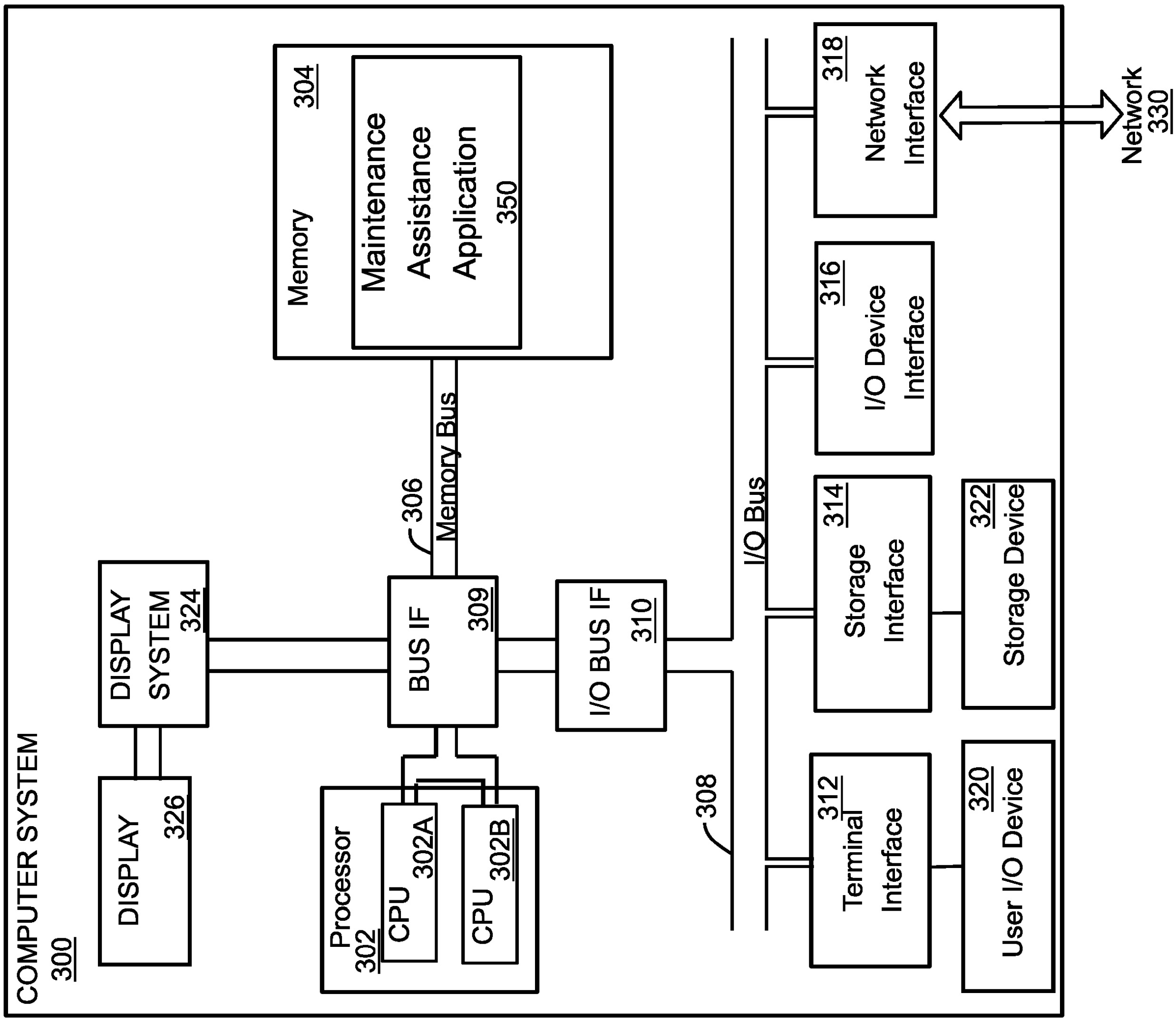
COMPUTER SYSTEM
300
DISPLAY
326
DISPLAY
SYSTEM
324
Processor
302
CPU
302A
CPU
302B
BUS IF
309
306
Memory Bus
Memory
304
Maintenance
Assistance
Application
350
I/O BUS IF
310
I/O Bus
308
Terminal
Interface
312
User I/O Device
320
Storage
Interface
314
Storage Device
322
I/O Device
Interface
316
Network
Interface
318
Network
330

FIG. 1

FIG. 2

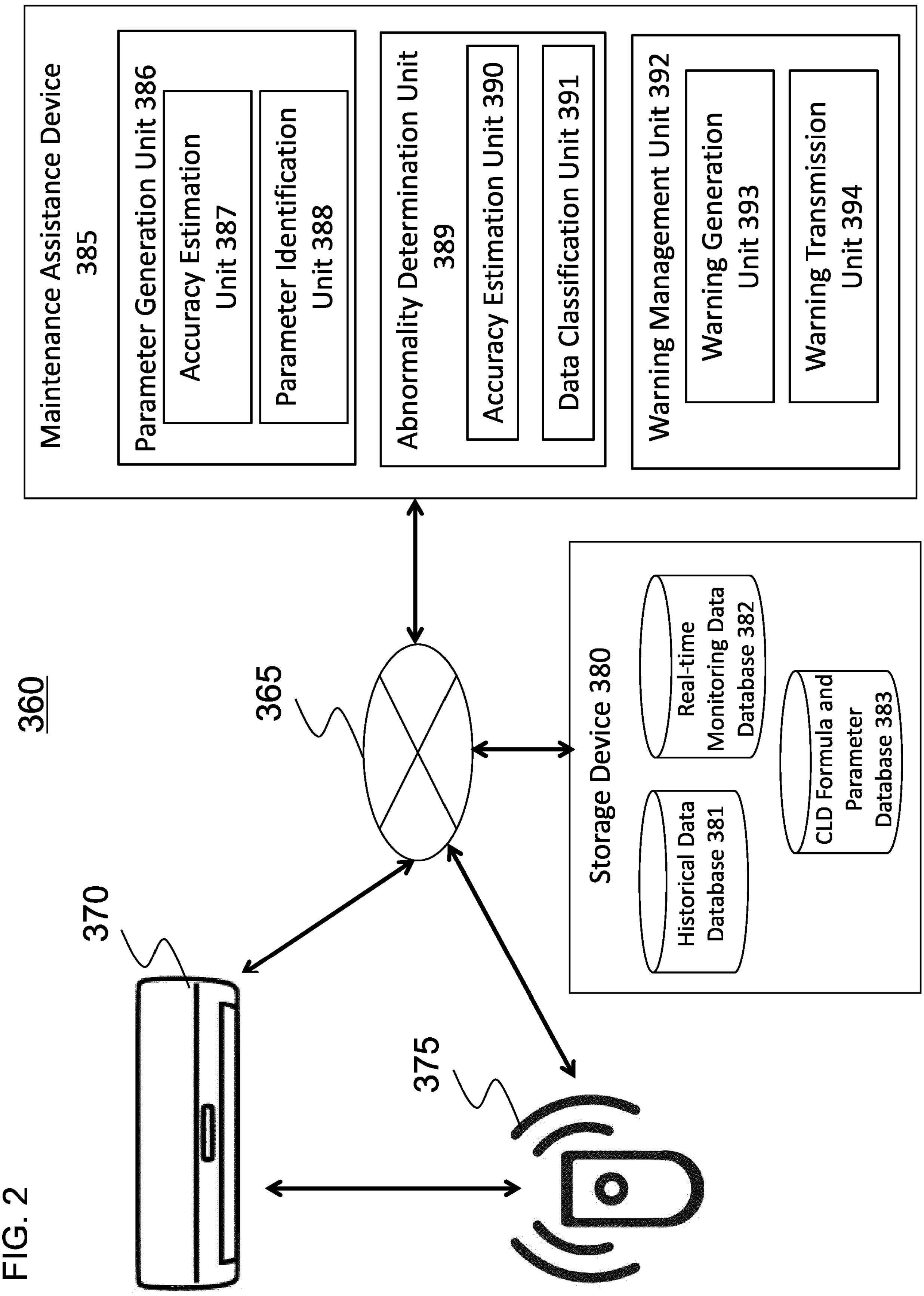
360
Maintenance Assistance Device 385
Parameter Generation Unit 386
Accuracy Estimation Unit 387
Parameter Identification Unit 388
Abnormality Determination Unit 389
Accuracy Estimation Unit 390
Data Classification Unit 391
Warning Management Unit 392
Warning Generation Unit 393
Warning Transmission Unit 394
365
Storage Device 380
Historical Data Database 381
Real-time Monitoring Data Database 382
CLD Formula and Parameter Database 383
370
375

FIG. 3

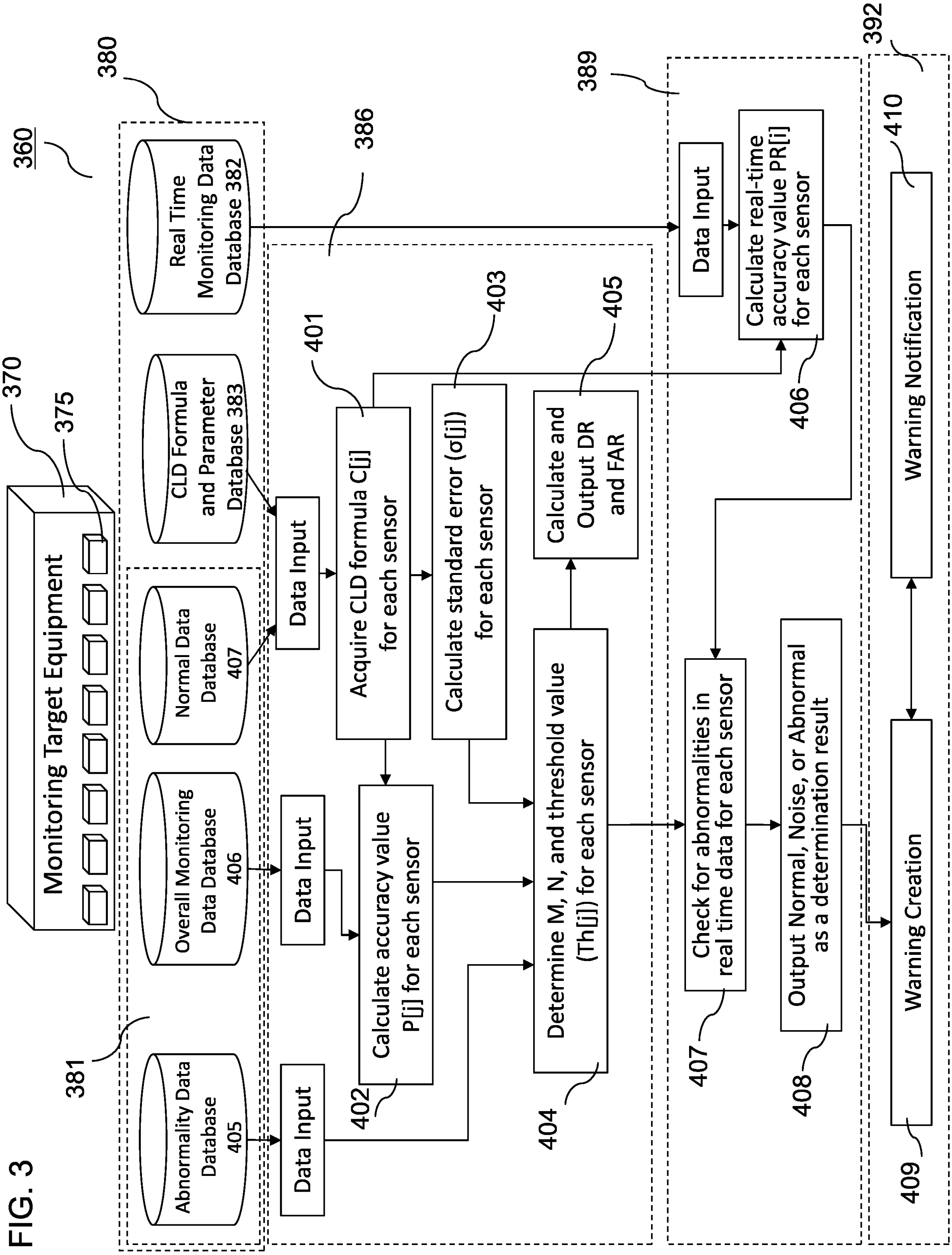
360
370
375
Monitoring Target Equipment
380
381
Real Time Monitoring Data Database 382
CLD Formula and Parameter Database 383
Normal Data Database 407
Overall Monitoring Data Database 406
Abnormality Data Database 405
386
Data Input
Data Input
Data Input
401
Acquire CLD formula C[j] for each sensor
402
Calculate accuracy value P[j] for each sensor
403
Calculate standard error (σ[j]) for each sensor
404
Determine M, N, and threshold value (Th[j]) for each sensor
405
Calculate and Output DR and FAR
389
Data Input
406
Calculate real-time accuracy value PR[i] for each sensor
407
Check for abnormalities in real time data for each sensor
408
Output Normal, Noise, or Abnormal as a determination result
392
409
Warning Creation
410
Warning Notification

FIG. 4

Overall Monitoring Data Database 406

422 424 426

| X2020 | X2021 | X2022 | X2023 | X2024 | X2025 | X2026 | X2027 | X2028 |
|---|---|---|---|---|---|---|---|---|
| 19/06/15 | 43 | 1 | 0 | 7 | 1 | 0 | 44 | 0 |
| 19/06/16 | 22 | 1 | 2 | 0 | 1 | 0 | 90 | 7 |
| 19/06/17 | 99 | 7 | 0 | 7 | 3 | 0 | 82 | 4 |
| 19/06/18 | 32 | 9 | 0 | 0 | 1 | 6 | 67 | 6 |
| 19/06/19 | 45 | 8 | 4 | 6 | 1 | 0 | 22 | 0 |
| 19/06/20 | 21 | 4 | 3 | 0 | 2 | 6 | 22 | 5 |
| 19/06/21 | 49 | 1 | 0 | 5 | 1 | 0 | 43 | 0 |
| 19/06/22 | 73 | 6 | 5 | 0 | 1 | 6 | 75 | 6 |
| 19/06/23 | 56 | 1 | 0 | 0 | 4 | 0 | 14 | 0 |
| 19/06/24 | 78 | 6 | 4 | 0 | 1 | 0 | 10 | 7 |
| 19/06/25 | 83 | 1 | 0 | 0 | 5 | 6 | 85 | 0 |
| 19/06/26 | 83 | 5 | 0 | 0 | 1 | 0 | 85 | 6 |
| 19/06/27 | 91 | 1 | 5 | 0 | 1 | 0 | 33 | 5 |
| 19/06/28 | 65 | 1 | 0 | 0 | 1 | 0 | 44 | 0 |
| | | | | | | | | |

...

...

FIG. 5

Historical Abnormality Data Database 405

430 431 432 433

| ID | Abnormality Occurrence Date and Time | Abnormality Resolution Date and Time | Maintenance Operation |
|---|---|---|---|
| A1 | 2018/9/30 0:00 | 2018/9/30 23:00 | Compressor Replacement |
| A2 | 2019/8/23 6:51 | 2019/8/23 8:30 | Fan Replacement |
| A3 | 2018/10/24 4:39 | 2018/10/24 6:06 | Recalibration |
| A4 | 2016/11/10 10:02 | 2016/11/11 13:49 | Thermometer Replacement |
| A5 | 2018/10/24 4:39 | 2018/10/24 6:06 | Heater Replacement |
| A6 | 2018/11/10 10:02 | 2018/11/11 13:49 | Compressor Replacement |
| A7 | 2018/8/2 0:00 | 2018/8/2 23:00 | Compressor Replacement |
| A8 | 2018/10/11 21:00 | 2018/10/12 2:30 | Compressor Replacement |

FIG. 6

CLD Formula and Parameter Database 383

| 601 Equipment Name | 602 CLD Formula | 604 Threshold value | 606 Standard Error | 608 N | 610 M |
|---|---|---|---|---|---|
| Air Conditioner 1 | X18 = X3^3 + 6*X5*X7 + 10 | 0.955 | 0.02 | 3 | 4 |
| | X3 = 3*X4 + 4*X8^2 -11 | 0.921 | 0.018 | 3 | 4 |
| | X5 = X2*X9 + 2*X11 | 0.933 | 0.015 | 3 | 4 |
| | X25 = 7*X38 – 2*X45^3 - 2 | 0.94 | 0.014 | 3 | 4 |
| | X102 = 4*X207 + X114^2 | 0.912 | 0.021 | 3 | 4 |
| | X500 = 2*X600 - 5 | 0.92 | 0.011 | 3 | 4 |
| Air Conditioner 2 | X5 = X2*X9 + 2*X11*X12 | 0.96 | 0.015 | 3 | 4 |
| | X125 = 7*X48 – 2*X45^3 - 2 | 0.944 | 0.022 | 3 | 4 |
| | X12 = 4*X27 + X114^2 | 0.951 | 0.013 | 3 | 4 |
| | | | | | |

FIG. 7

Real-time Monitoring Data Database 382

701 702 704 706 708 710 712 712a 712b

| Equipment Name | CLD Formula | Thres hold value | Stand ard Error | N | M | Date and time/state | | | | |
|---|---|---|---|---|---|---|---|---|---|---|
| | | | | | | 7:11 | | 7:12 | | ... |
| | | | | | | State for each formula | Overall State | State for each formula | Overall State | |
| Air Conditioner 1 | X18 = X3^3 + 6*X5*X7 + 10 | 0.955 | 0.02 | 3 | 4 | Normal | Noise (X5) | Normal | Normal | |
| | X3 = 3*X4 + 4*X8^2 -11 | 0.921 | 0.018 | 3 | 4 | Normal | | Normal | | |
| | X5 = X2*X9 + 2*X11 | 0.933 | 0.015 | 3 | 4 | Noise | | Normal | | |
| | X25 = 7*X38 – 2*X45^3 - 2 | 0.94 | 0.014 | 3 | 4 | Normal | | Normal | | |
| | X102 = 4*X207 + X114^2 | 0.912 | 0.021 | 3 | 4 | Normal | | Normal | | |
| | X50 = 2*X60 - 5 | 0.92 | 0.011 | 3 | 4 | Normal | | Normal | | |
| Air Conditioner 2 | X5 = X2*X9 + 2*X11*X12 | 0.96 | 0.015 | 3 | 4 | Normal | Abnormal (X12) | Normal | Abnormal (X12) | |
| | X15 = 7*X48 – 2*X45^3 - 2 | 0.944 | 0.022 | 3 | 4 | Noise | | Normal | | |
| | X12 = 4*X27 + X114^2 | 0.951 | 0.013 | 3 | 4 | Abnormal | | Abnormal | | |
| ... | | | | | | | | | | |

FIG. 8

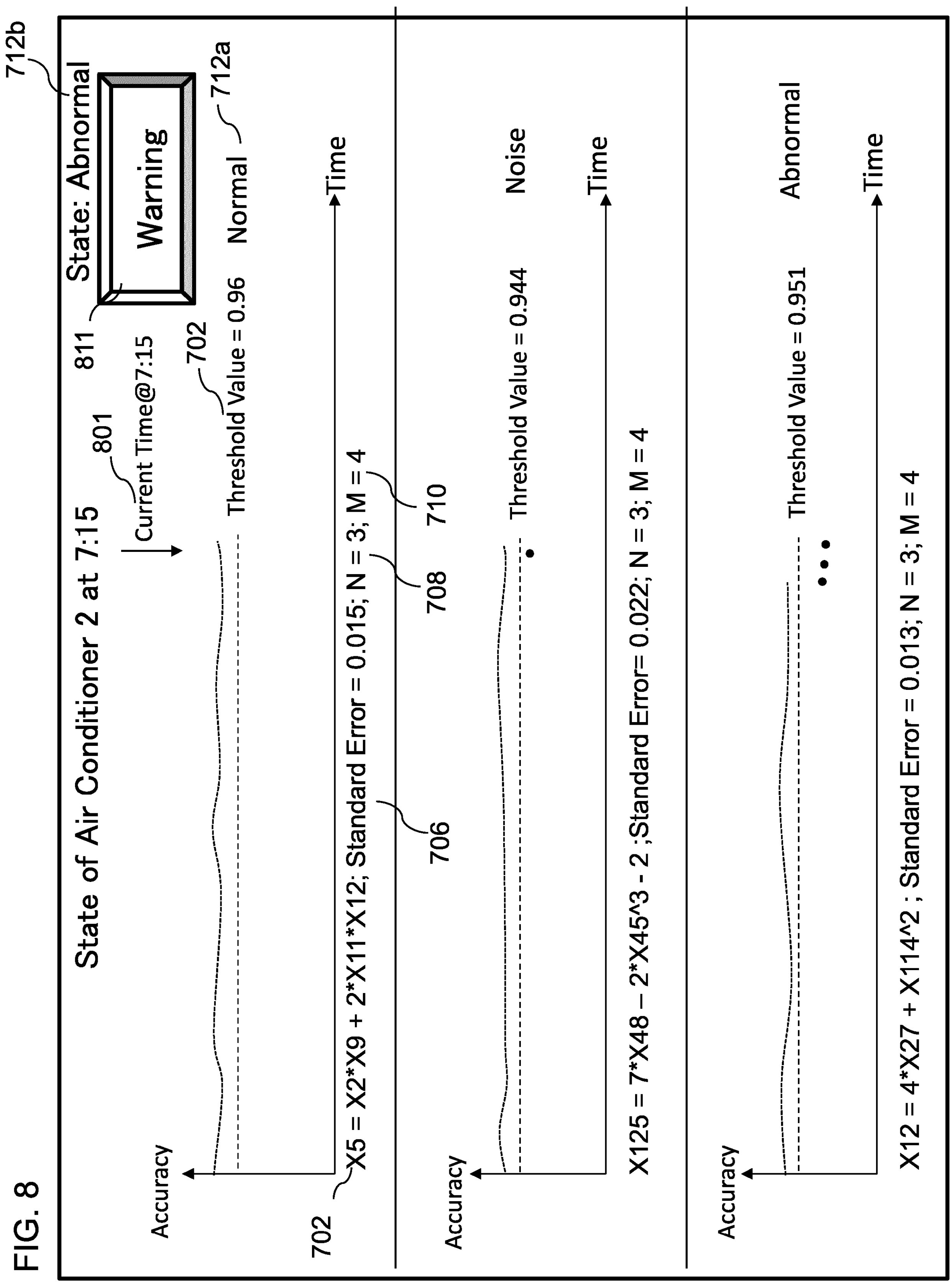
712b
State: Abnormal
Warning
811
712a
Normal
State of Air Conditioner 2 at 7:15
801
Current Time@7:15
702
Threshold Value = 0.96
Time
Accuracy
702
X5 = X2*X9 + 2*X11*X12; Standard Error = 0.015; N = 3; M = 4
706
708
710
Noise
Threshold Value = 0.944
Time
Accuracy
X125 = 7*X48 – 2*X45^3 - 2 ;Standard Error= 0.022; N = 3; M = 4
Abnormal
Threshold Value = 0.951
Time
Accuracy
X12 = 4*X27 + X114^2 ; Standard Error = 0.013; N = 3; M = 4

FIG. 9

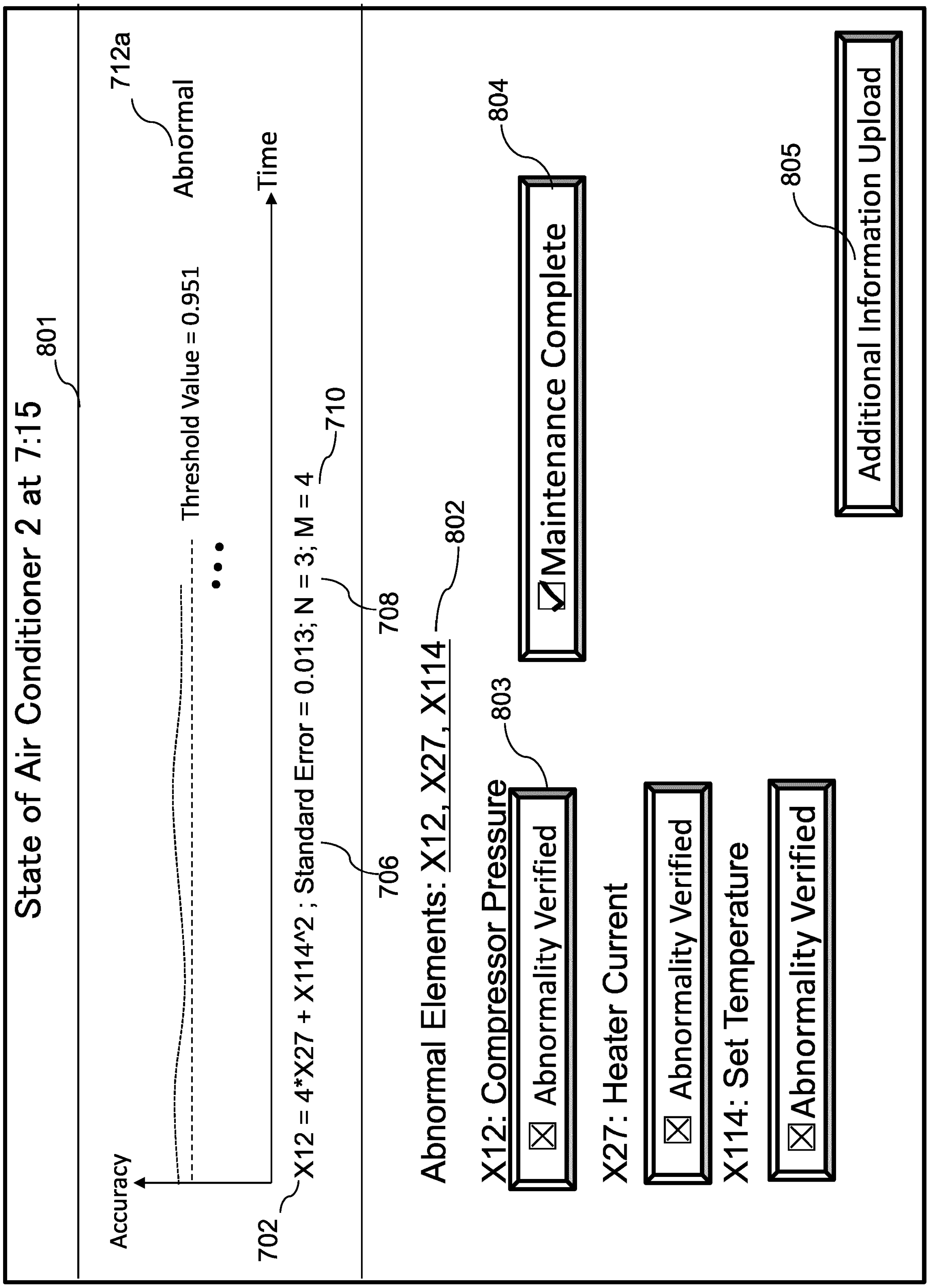
State of Air Conditioner 2 at 7:15
801
Accuracy
Time
Threshold Value = 0.951
Abnormal
712a
702
X12 = 4*X27 + X114^2 ; Standard Error = 0.013; N = 3; M = 4
706
708
710
Abnormal Elements: X12, X27, X114
802
X12: Compressor Pressure
Abnormality Verified
803
X27: Heater Current
Abnormality Verified
X114: Set Temperature
Abnormality Verified
Maintenance Complete
804
Additional Information Upload
805

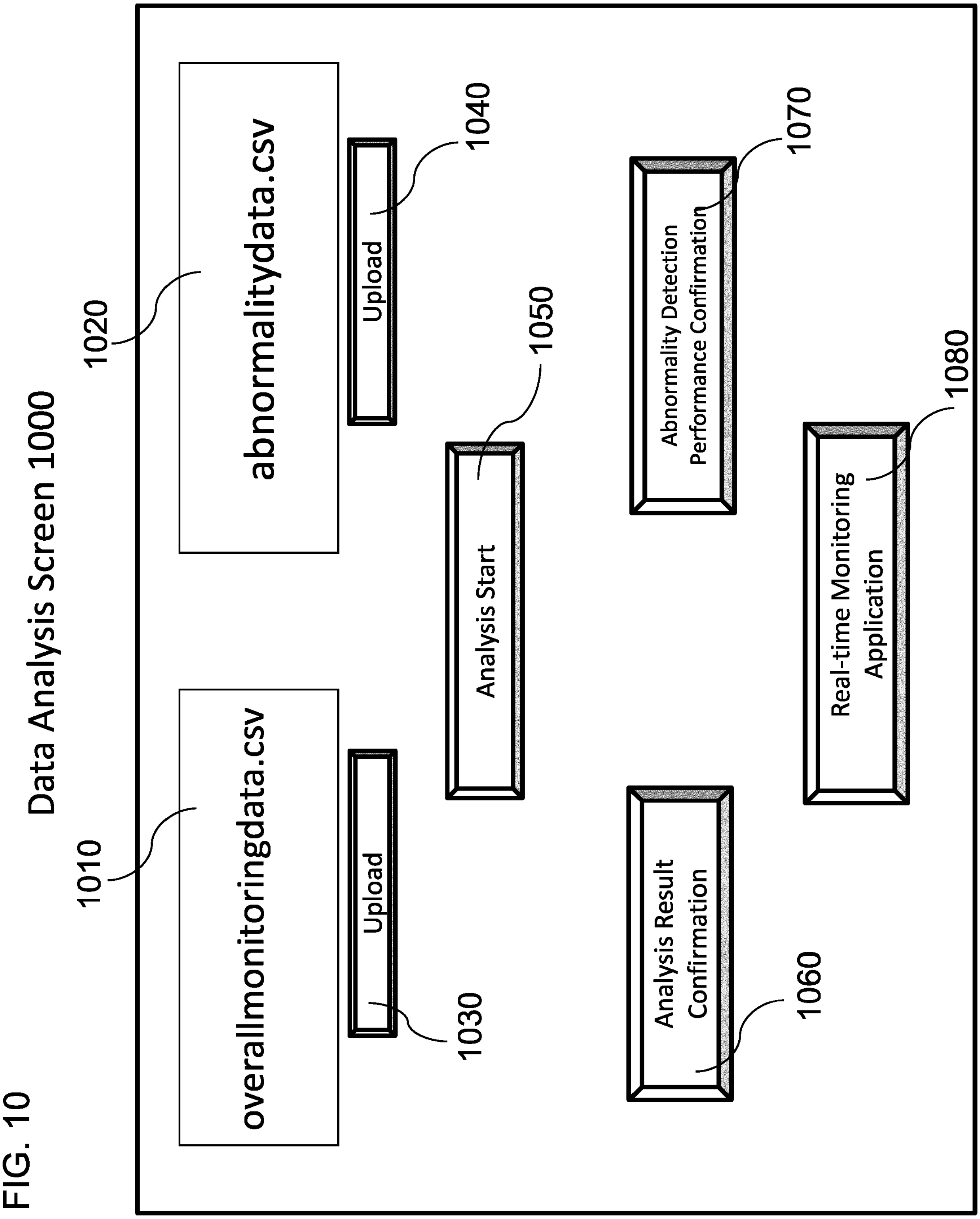
Data Analysis Screen 1000
1010
overallmonitoringdata.csv
1020
abnormalitydata.csv
Upload
1030
Upload
1040
Analysis Start
1050
Analysis Result Confirmation
1060
Abnormality Detection Performance Confirmation
1070
Real-time Monitoring Application
1080

FIG. 10

FIG. 11

| | Abnormality 1110 | No Abnormality 1120 |
|---|---|---|
| Abnormality Detected | True Positive Rate (TP) : 55 | False Positive Rate (FP) :10 |
| Abnormality Not Detected | False Negative Rate (FN) : 5 | True Negative Rate (TN): 10000 |

1130 1140

1. False Alarm Rate (FAR) 1150

FAR = FP/(FP+TN) = 0.1%

2. Detection Rate (DR) 1160

DR = TP/(TP+FN) = 91.7%

FIG. 12

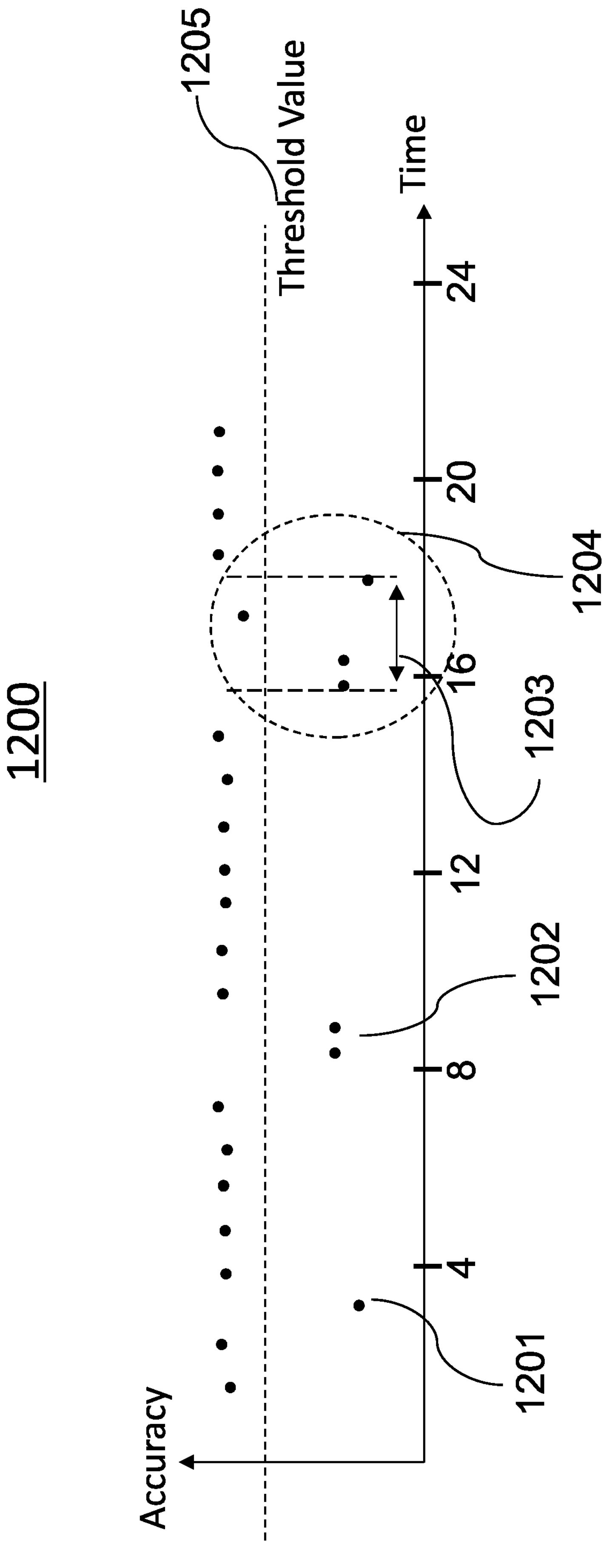
1200
Accuracy
Threshold Value
Time
4
8
12
16
20
24
1201
1202
1203
1204
1205

FIG. 13

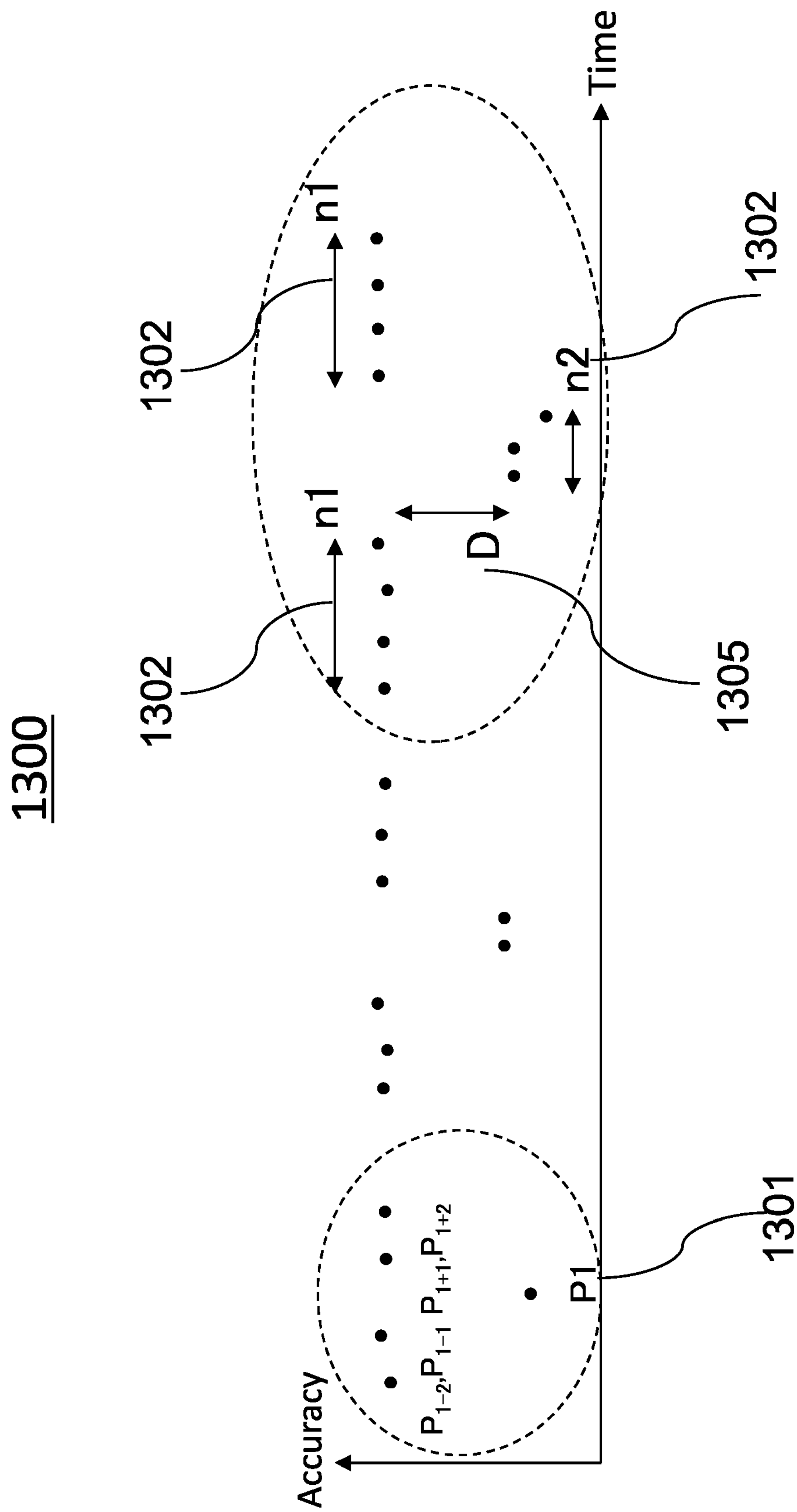
1300
Time
Accuracy
1302
1302
1302
n1
n1
n2
D
1305
1301
P1
P1−2,P1−1 P1+1,P1+2

FIG. 14

1400

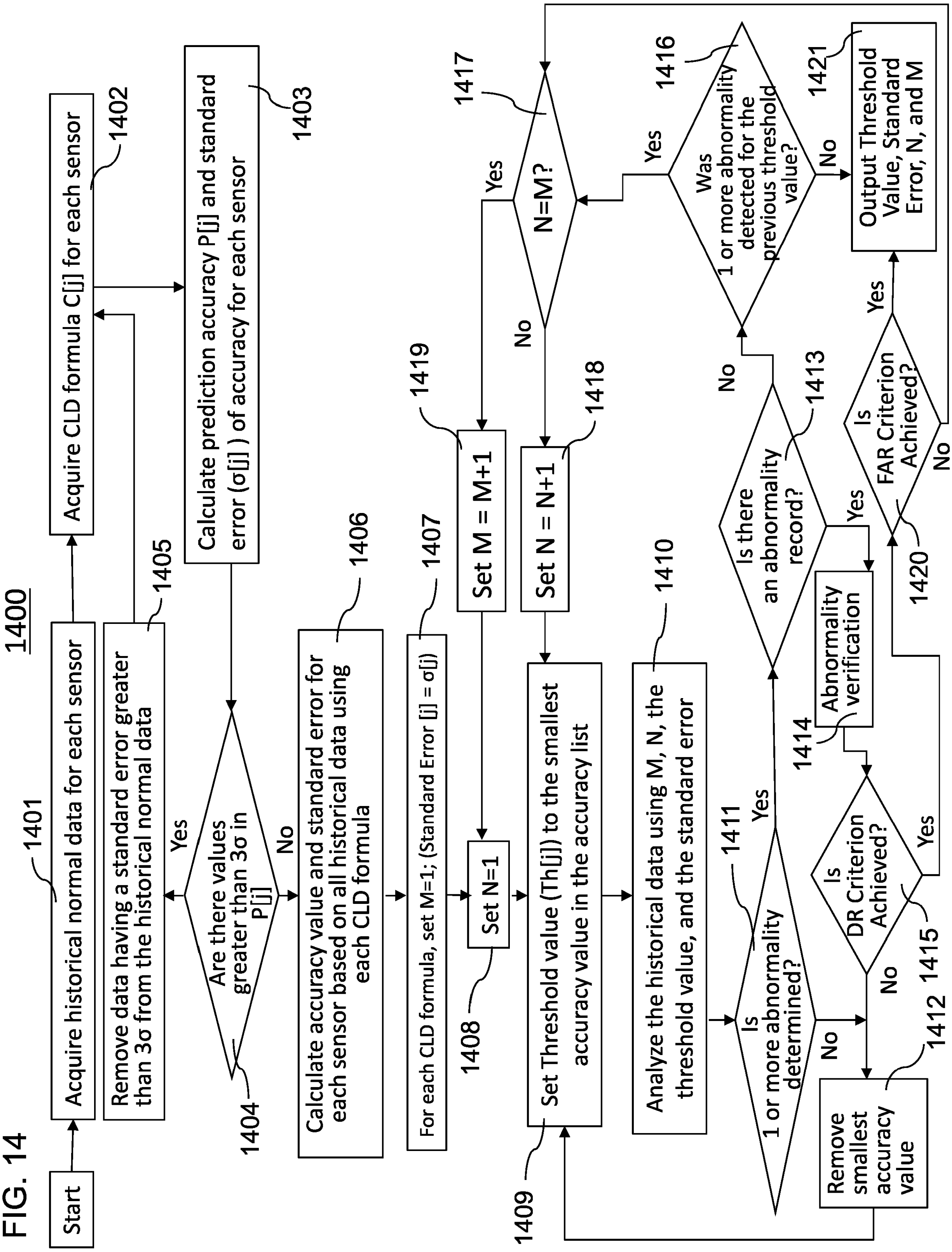
Start
Acquire historical normal data for each sensor
1401
Acquire CLD formula C[j] for each sensor
1402
Calculate prediction accuracy P[j] and standard error (σ[j]) of accuracy for each sensor
1403
Are there values greater than 3σ in P[j]
1404
Yes
No
Remove data having a standard error greater than 3σ from the historical normal data
1405
Calculate accuracy value and standard error for each sensor based on all historical data using each CLD formula
1406
For each CLD formula, set M=1; (Standard Error [j] = σ[j])
1407
Set N=1
1408
Set Threshold value (Th[j]) to the smallest accuracy value in the accuracy list
1409
Analyze the historical data using M, N, the threshold value, and the standard error
1410
Is 1 or more abnormality determined?
1411
Yes
No
Is there an abnormality record?
1413
Yes
No
Abnormality verification
1414
Is DR Criterion Achieved?
1415
Yes
No
Remove smallest accuracy value
1412
Was 1 or more abnormality detected for the previous threshold value?
1416
Yes
No
N=M?
1417
Yes
No
Set N = N+1
1418
Set M = M+1
1419
Is FAR Criterion Achieved?
1420
Yes
No
Output Threshold Value, Standard Error, N, and M
1421

FIG. 15

1500

| Equipment Name (1501) | CLD Formula (1502) | Time (1503) | P(j,i) (1504) | Accuracy Value (1505) | Standard Error (1506) | N (1507) | M (1508) |
|---|---|---|---|---|---|---|---|
| Air Conditioner 1 | F1: X18 = X3^3 + 6*X5*X7 + 10 | t1 | P(1,1) | 0.988 | | | |
| | | t2 | P(1,2) | 0.992 | | | |
| | | t3 | P(1,3) | 0.995 | | | |
| | | ... | ... | ... | ... | | |
| | | ti | P(1,i) | 0.997 | | | |
| | F2: X3 = 3*X4 + 4*X8^2 -11 | t1 | P(2,1) | 0.993 | | | |
| | | ... | ... | ... | ... | | |
| | | ti | P(2,i) | 0.999 | | | |

FIG. 16

1600

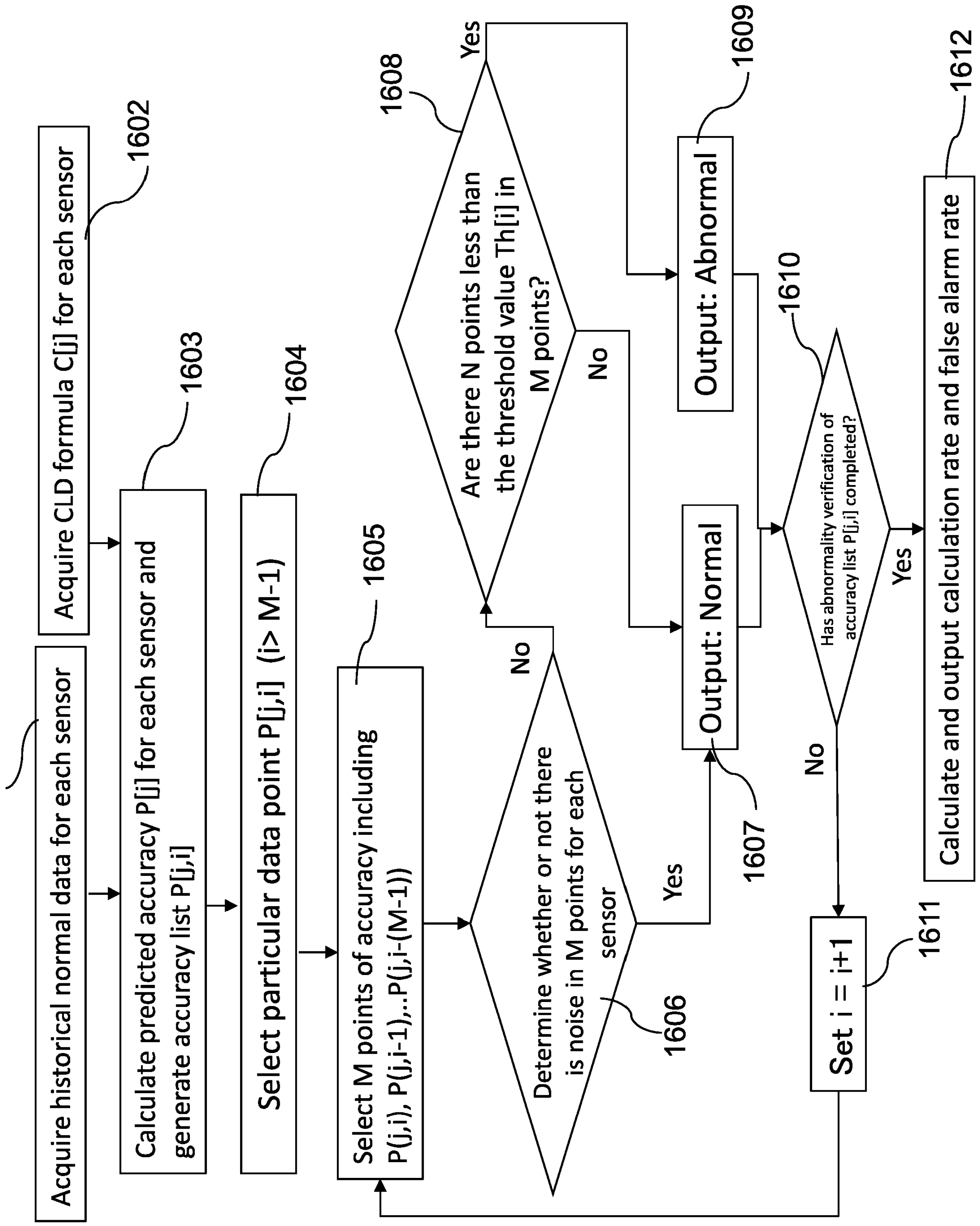

Acquire historical normal data for each sensor
1601
Acquire CLD formula C[j] for each sensor
1602
Calculate predicted accuracy P[j] for each sensor and generate accuracy list P[j,i]
1603
Select particular data point P[j,i] (i> M-1)
1604
Select M points of accuracy including P(j,i), P(j,i-1),..P(j,i-(M-1))
1605
Determine whether or not there is noise in M points for each sensor
1606
Yes
No
Output: Normal
1607
Are there N points less than the threshold value Th[i] in M points?
1608
Yes
No
Output: Abnormal
1609
Has abnormality verification of accuracy list P[j,i] completed?
1610
Yes
No
Set i = i+1
1611
Calculate and output calculation rate and false alarm rate
1612

FIG. 17

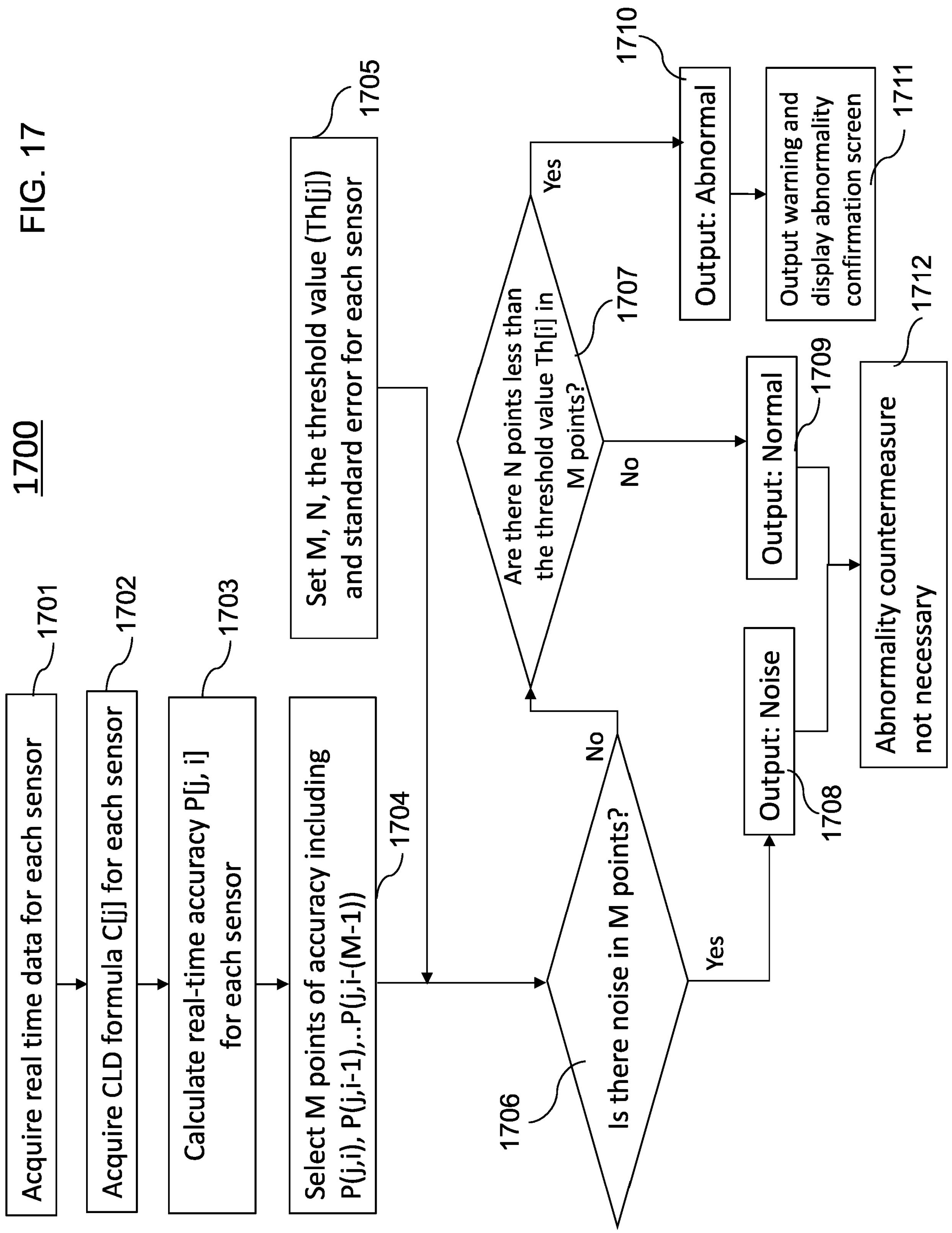
1700
Acquire real time data for each sensor
1701
Acquire CLD formula C[j] for each sensor
1702
Calculate real-time accuracy P[j, i] for each sensor
1703
Select M points of accuracy including P(j,i), P(j,i-1),..P(j,i-(M-1))
1704
Set M, N, the threshold value (Th[j]) and standard error for each sensor
1705
Is there noise in M points?
1706
Yes
No
Are there N points less than the threshold value Th[i] in M points?
1707
Yes
No
Output: Noise
1708
Output: Normal
1709
Output: Abnormal
1710
Output warning and display abnormality confirmation screen
1711
Abnormality countermeasure not necessary
1712

FIG. 18

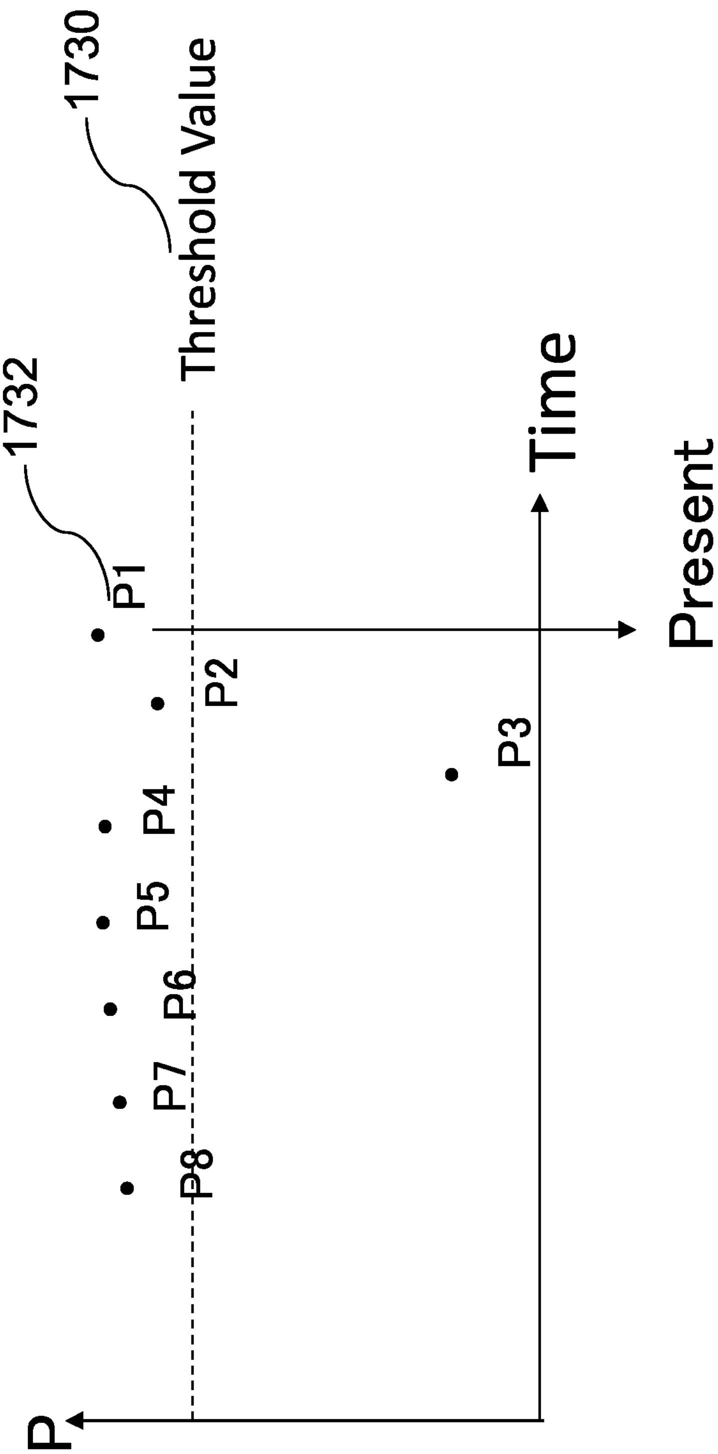
1730
Threshold Value
1732
P1
P2
P3
P4
P5
P6
P7
P8
Time
Present
P

FIG. 19

1800

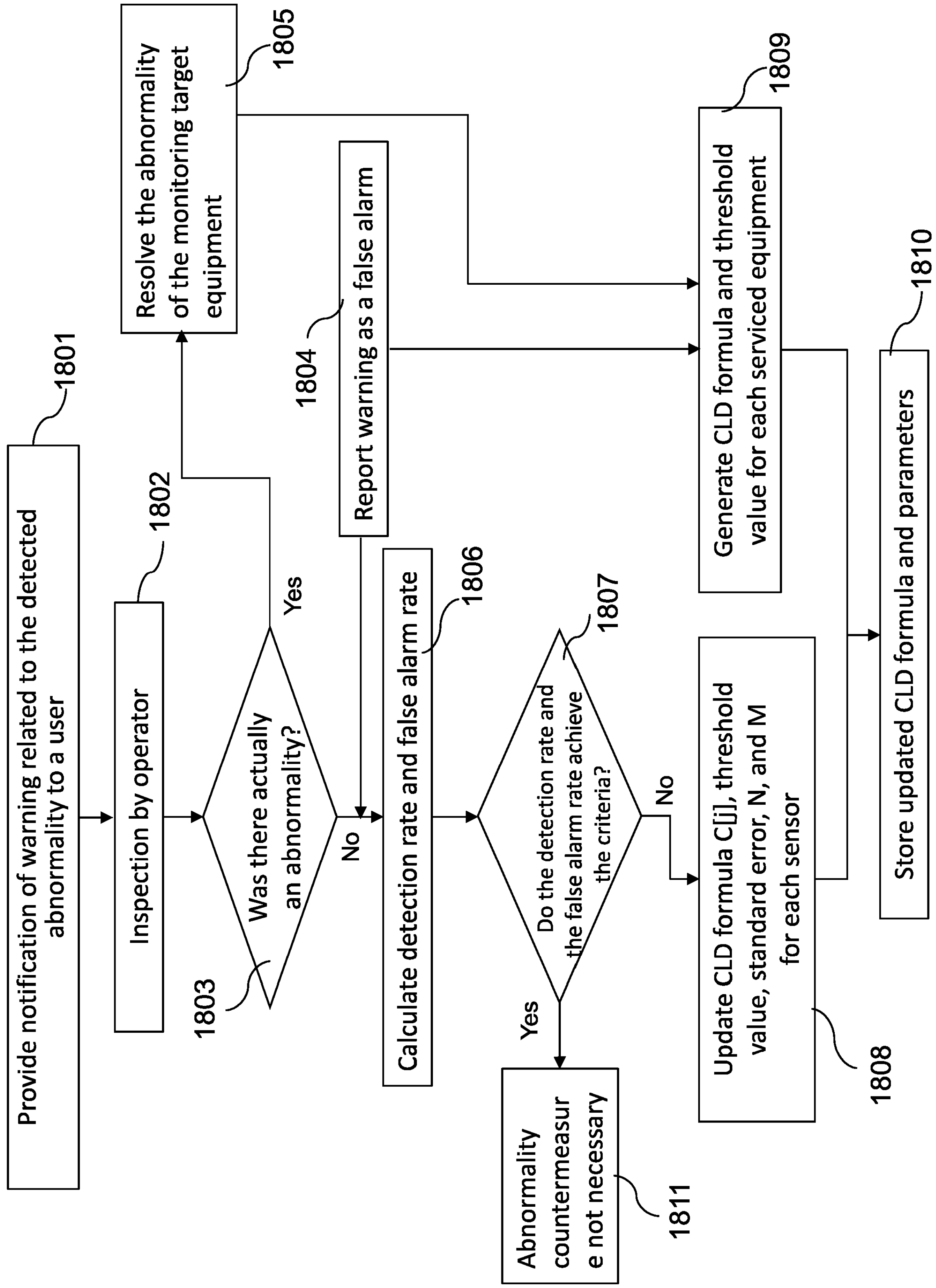
Provide notification of warning related to the detected abnormality to a user
1801
Inspection by operator
1802
Was there actually an abnormality?
1803
Yes
No
Resolve the abnormality of the monitoring target equipment
1805
Report warning as a false alarm
1804
Calculate detection rate and false alarm rate
1806
Do the detection rate and the false alarm rate achieve the criteria?
1807
Yes
No
Abnormality countermeasure not necessary
1811
Update CLD formula C[j], threshold value, standard error, N, and M for each sensor
1808
Generate CLD formula and threshold value for each serviced equipment
1809
Store updated CLD formula and parameters
1810

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2016116961 A
- JP 2018156346 A
- EP 1724717 A2
- US 2012209798 A1
- US 2008219544 A1